# EUROPEAN PATENT APPLICATION

(11) **EP 2 589 569 A1**
(43) Date of publication of application: **08.05.2013**
(21) Application number: 11800918.2
(22) Date of filing: 29.06.2011
(51) Int. Cl.: C01B 13/36, C01G 31/02, C01G 43/025, G21C 3/42

(54) **METHOD FOR CONTROLLING HYDROTHERMAL SYNTHESIS REACTION USING ALDEHYDE**

(30) Priority: 29.06.2010 JP 2010147780
(71) Applicant: Tohoku University, Sendai-shi, Miyagi 980-8577 (JP)
(72) Inventor: YAMAMURA Tomoo, Sendai-shi Miyagi 980-8577 (JP); SHIRASAKI, Kenji, Sendai-shi Miyagi 980-8577 (JP); SATO, Isamu, Sendai-shi Miyagi 980-8577 (JP)
(74) Representative: Isarpatent
(86) International application number: PCT/JP2011/064954
(87) International publication number: WO 2012/002456

(57) **Abstract**

Disclosed is a method of using an aldehyde to produce metal oxide particles by mixing the aldhyde with an aqueous solution including a metal ion to prepare a mixture, placing the mixture under a high temperature and high pressure environment, and cooling the mixture to generate a particle of a metal oxide.

## Description

### FIELD

The present invention relates to a method for generating a vanadium oxide particles, in particular, a particle of actinide oxide crystal having a fluorite-type crystal structure, using an aldehyde in a hydrothermal synthesis method.

### BACKGROUNBD

In JP Patent No. 4379725, one of hydrothermal synthesis methods for generating a metal oxide particle using a supercritical hydrothermal synthesis method that has studied and developed by Ajiri et al. is disclosed. Since the physical properties of the fluid such as the dielectric constant, the diffusion rate, the thermal conductivity, and the like may be changed greatly, the shape and/or the size of a metal oxide fine particle may be easily varied by controlling the reaction rate and the reaction pathways under the supercritical or subcritical water condition. In addition, under the supercritical or subcritical water condition, a very large thermal conductivity can be obtained compared to the liquid phase, and a large diffusion coefficient can be obtained compared to the vapor phase. Therefore, a uniform reaction conditions in the reactor can be realized to suppress the increase in the variation in particle shape and particle size distribution, due to variations in a temperature gradient, a pressure gradient, and a concentration.

In the hydrothermal synthesis reaction, a hydrothermal synthesis reaction:
[1]

M(NO₃)ₓ + ₓH₂O → M(OH)ₓ + xHNO₃ (1).

M (OH)ₓ → MO_{x/z} + (x/2) H₂O (2).

proceeds, where M is a metal. According to the method for producing metal oxide particles disclosed in JP Patent No. 4379725, water, at least one of water-soluble metal nitrates, and ammonia or ammonium salts can be reacted in a reactor, in preferably in a continuous reactor under a supercritical water or subcritical water condition to produce a fine particle having a particle size of 1 to 1000nm. In particular, the fine particle may be a metal oxide, and the metal elements that can be used in the synthesis of metal oxide includes uranium.

Further, uranium dioxide (U02) has high melting point and is used as a light-water-cooled reactor fuel. In the preparation in a sedimentation method or a solvent evaporation method, a combination of a plurality of steps may be needed to obtain uranium dioxide. For example, in a solid chemical method, uranium dioxide is prepared by hydrogen reduction of triuranium octaoxide (U308), and grinding and granulation and classification are needed to be performed to obtain a raw material powder. The preparation method of uranium dioxide or triuranium octaoxide includes the method according to the hydrothermal method, which is disclosed in PCT International Patent Application No. PCT/JP2009/055458 entitled "actinide oxide crystal manufacturing method".

In addition to uranium dioxide (UO₂) mentioned above, uranium oxide includes uranium trioxide (UO₃), triuranium octaoxide (U₃O₈), and uranium peroxide (UO₄·H₂O). Uranium (U) may be present as trivalent ion U3+, tetravalent uranium ion U4+, pentavalent uranium ion UVO₂⁺, or hexavalent uranyl ion U^{VI}O₂²⁺ in aqueous solution. However, trivalent ion U³⁺ is unstable enough to generate hydrogen by reducing the water, and U^{V}O²⁺ is also unstable enough to be disproportionated to U⁴⁺ and U^{V}O²⁺ as follows:
[2]

2 U^{v}O₂⁺ + 4H⁺→U⁴⁺ + U^{yI}O₂²⁺ + 2H₂O (3)

Further, U₃O₈ and UO₂ may be produced from U⁴⁺ and UO₂²⁺ as follows:
[3]

U⁴⁺ + 4H₂O→U (OH)₄ + 4H⁺ (4)

U(OH)₄ → UO₂ + 2 H₂O (5)

In fact, J. Sato et al. in Nucl. Sci. Technol. Vol. 37, p. 1003 (2000) reported that a mixture of uranium dioxide (U02) and triuranium octaoxide (U₃O₈) may be generated in supercritical ethanol having high-temperature and high-pressure state of 250 degrees Celsius and 40 MPa.

Recently, vanadium trioxide (V₂O₃) is now attracting attention as a cathode material for lithium batteries.

As a process for the preparation of vanadium trioxide (V203), a method using a solid-gas reaction is known. For example, S. A. Corr et al. in J. Mater. Chem. Vol.19, p. 4362 discloses the following method. By solvothermal reduction of vanadium pentoxide (V₂O₅) together with formaldehyde or isopropanol, nanorods of metastable monoclinic vanadium dioxide (VO₂) can be obtained. The nanorods of metastable monoclinic vanadium dioxide (V02) are converted to rutile structure VO₂ by heating in argon, and to V203 corundum structure (Al₂O₃-type, trigonal structure) by reduction process.

Further, for example, by using a hydrothermal synthesis catalyst, it would be able to prepare V₂O₃ nanoflake as follows. The vanadium pentoxide (V₂O₅) powder is dissolved in absolute ethanol, and then is diffused vigorously at room temperature to be dispersed, thereby preparing a dispersion. This dispersion is transferred to an autoclave, and is kept at a high temperature of about 180 degrees Celsius for several days. The product is cleaned and dried in vacuum, and the dried product is annealed at 400 degrees Celsius for several hours to prepare V₂O₃ nanoflake. Such a method is disclosed, for example, by H. Liu et al. in Chem. Phys. Chem. Vol. 11 (2010) p. 3273.

### Summary of the invention

### Problems to be solved

In the method for producing metal oxide particles according to JP Patent No. 4379725, in which water, at least one of water-soluble metal nitrates, and ammonia or ammonium salts are reacted under a supercritical water or subcritical water condition, it is considered a so-called supercritical hydrothermal synthesis reaction proceeds. However, in order to make the supercritical hydrothermal synthesis reaction proceed, it is necessary to prepare a reaction field of high temperature and high pressure, hence the method according to JP Patent No. 4379725 is not easy to apply the industrial object in the views of safety, cost, and the small number of steps.

In addition, when the hydrothermal synthesis reaction is carried out in a reaction time of 30 minutes at 390 degrees Celsius higher than the supercritical temperature of water using a nitrate uranium containing tetravalent uranium ions U⁴⁺, it is known that trioxide uranium (UO₃) is obtained as a product if no organic matter is added, and a product including hexavalent uranium ions U⁶⁺ is obtained if methanol or ammonium carbonate is added as an additive. That is, under the presence of nitrate that has oxidizing power, tetravalent uranium ions U⁴⁺ are oxidized to hexavalent uranium ions U₆⁺ via hydroxide. Further, a product that is obtained when ethanol or hexylamine is added as an additive is U(OH)₄. That is, methanol, ammonium carbonate do not function as a reducing agent at 390 degrees Celsius in the hydrothermal synthesis reaction with a reaction time of 30 minutes, and these experimental facts show that these additives have reduction power sufficient to reduce tetravalent uranium ion U4+ to hexavalent uranyl ion U6+, but not to have reduction power sufficient to oxidize a hydroxide. That is, there is a problem in which it is not easy to generate not a trioxide uranium (UO₃) but the desired uranium dioxide (UO₂).

In the patent application PCT/JP2009/055458 including the same inventors of the present invention, it has been found that actinide oxide crystal particles having a fluorite-type crystal structure can be generated by mixing actinide aqueous solution and organic material and placing the mixture under high temperature and high pressure environment. In this way, the step of mixing the actinide aqueous solution and organic material was key step.

However, it is not known which organic material pocesses not only the function as a catalyst to reduce the activation energy of the oxidation process in the production of fine particles of crystalline uranium dioxide, but also the functions as a template crystal formation to promote a process of crystal formation at low temperature. Tetravalent uranium may have a tendency to be oxidized to hexavalent uranium if left untreated. It is not known which organic material suppresses the progress of the oxidation reaction.

Accordingly, there is provided a method for generating crystals of uranium dioxide having a fluorite-type crystal structure and a predetermined size and shape selectively to solve the problem described above. Further, there is provided a crystal of uranium dioxide having a fluorite crystal structure and a predetermined size and shape which is obtained by using such a method. Furthermore, in particular, ,an object of the present invention is to provide a crystal of uranium dioxide to be used as nuclear fuel in the power generation using nuclear fission, the crystal of the uranium dioxide having a fluorite-type crystal structure and a predetermined size and shape selectively, and to provide a crystal of uranium dioxide having a fluorite crystal structure and a predetermined size and shape which is obtained by using the method.

In the conventional synthesis method for generating vanadium trioxide (V₂O₃), there is a problem in which the crystal structure are not uniform, or the size of the crystal can not be controlled at the stage of preparation. For example, although the method that S. A. Corr et al. utilize includes steps of converting nanorods of metastable monoclinic vanadium dioxide (V02) to rutile structure VO₂, and converting to V₂O₃ having the corundum structure (Al₂O₃-type, trigonal structure), the size of crystal cannot be controlled.

Further, the hydrothermal synthesis method using a catalyst, there is a problem in which the method need to vary time for preparation of vanadium trioxide (V₂O₃). In fact, in the case of H. Li mentioned above, it took longer than 5 days for the preparation.

### MEANS FOR SOLVING THE PROBLEM

In order to solve the problems described above, one embodiment of a method for using an aldehyde according to the present invention includes mixing the aldehyde with an aqueous solution containing a metal ion, placing the mixture under high temperature and high pressure, and cooling the mixture to generate a particle of actinide oxide.

In order to solve the problems described above, one embodiment of a method for using an aldehyde according to the present invention includes mixing the aldehyde with an aqueous solution containing a tetravalent actinide ion or a tetravalent actinide complex, placing the mixture under high temperature and high pressure, and cooling the mixture to generate a particle of actinide oxide.

In order to solve the problems described above, one embodiment of a method for using an aldehyde according to the present invention includes mixing the aldehyde with an aqueous solution containing a tetravalent uranium ion, placing the mixture under high temperature and high pressure, and cooling the mixture to generate a particle of uranium dioxide selectively.

In order to solve the problems described above, another embodiment of a method for using an aldehyde according to the present invention includes mixing the aldehyde with an aqueous solution containing an actinide ion or an actinide complex having an oxidation number greater than the value of 4, placing the mixture under high temperature and high pressure to make reduction reaction of the actinide ion or the actinide complex and subsequent oxidation reaction proceed for generating a particle of actinide oxide.

In order to solve the problems described above, one embodiment of a method for using an aldehyde according to the present invention includes placing an uranyl (VI) nitrate containing a tetravalent uranium ion to make reduction reaction of the tetravalent uranium ion and subsequent oxidation reaction proceed for generating a particle of uranium dioxide selectively.

In order to solve the problems described above, one embodiment of a method for using an aldehyde according to the present invention includes mixing the aldehyde with an aqueous solution containing a salt and a vanadium dioxide ion to generate vanadium trioxide.

### BRIEF DESCRIPTION OF THE DRAWINGS

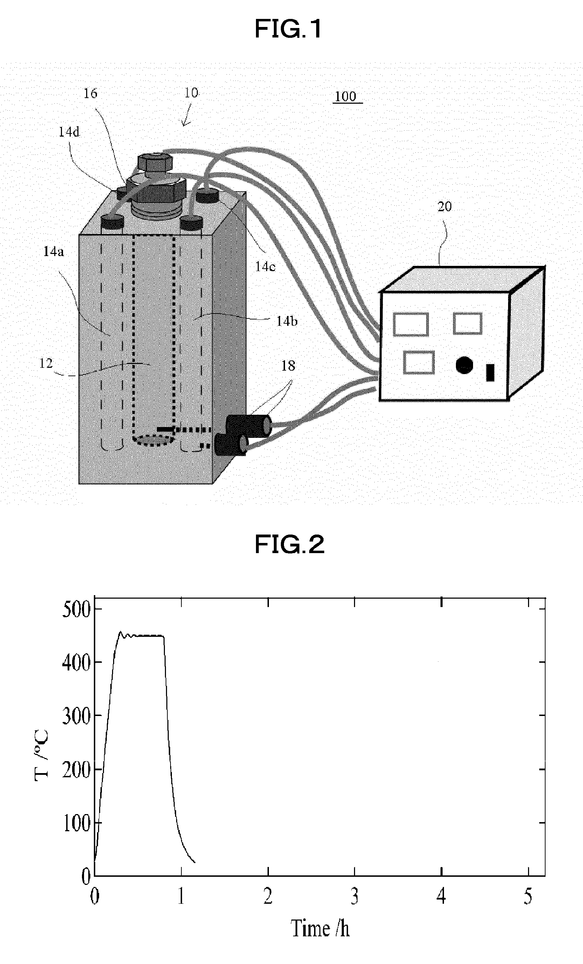

Figure 1 is a schematic diagram of an apparatus including a reactor (autoclave) and a temperature controller which are used to generate a crystal of an actinide oxide utilizing a method for using an aldehyde according to the present invention;
Figure 2 is a diagram showing the time variation of the temperature in the cell 12 having volume of 10mL that is received the actinide solution of 3mL using the temperature controller shown in Figure 1;

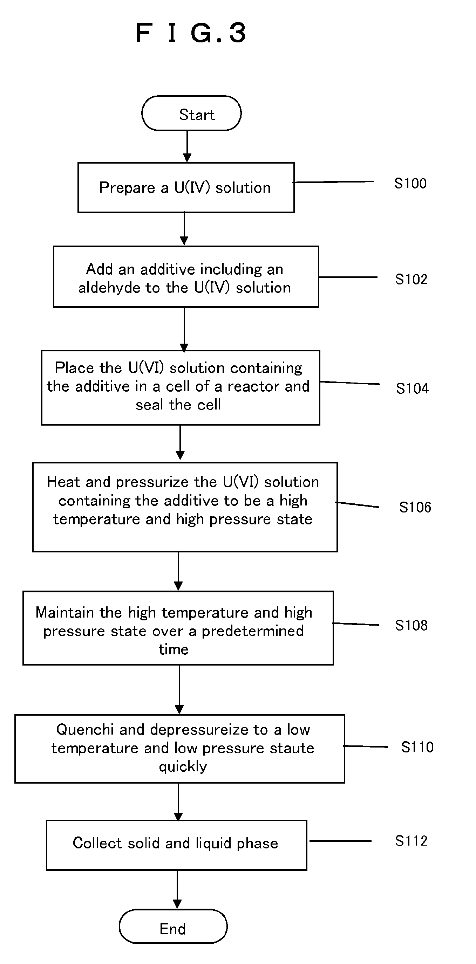

Figure 3 is a diagram showing a flowchart for generating a crystal of actinide oxide using the aldehyde according to the present invention;

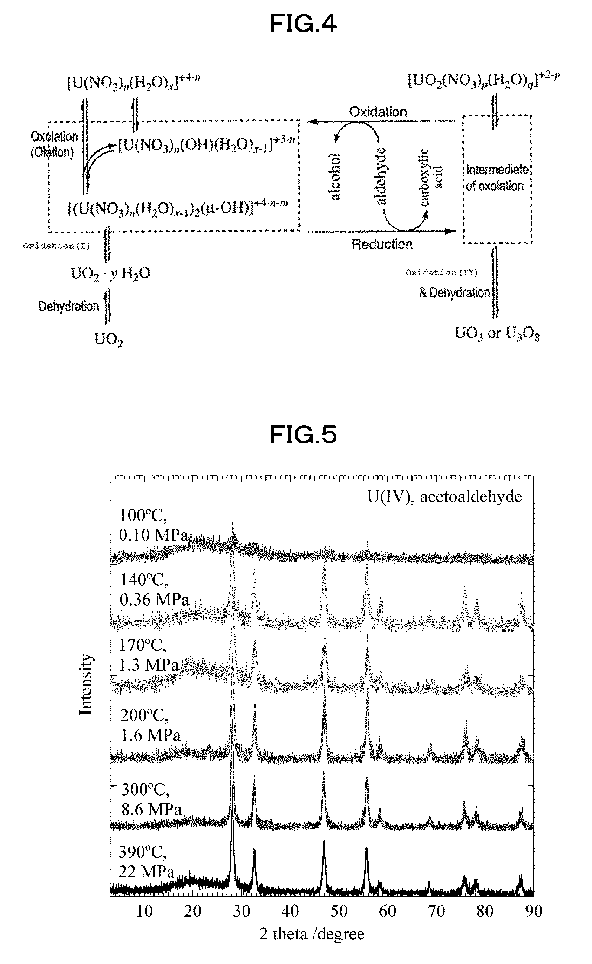

Figure 4 is a diagram showing the reaction mechanism of hydrothermal synthesis in the method for generating the crystalline uranium dioxide using the aldehydes according to the present invention;
Figure 5 is a diagram showing a result of X-ray diffraction analysis, the result showing that the crystalline uranium dioxide having a fluorite type crystal structure is generated using the method for generating a crystal of the uranium dioxide with the use of an aldehyde according to the present invention in which the hydrothermal reaction is proceeded under various conditions of aqueous uranium nitrate (IV) solutions to which the acetaldehyde is added;

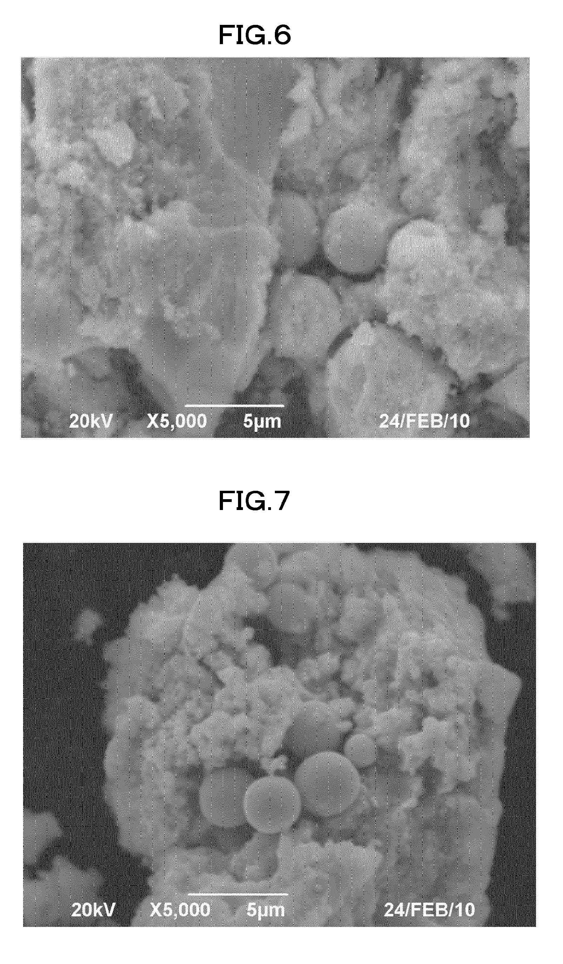

Figure 6 is a diagram showing a result obtained by using electron microscope (SEM), the result showing that a crystal of uranium dioxide having a spherical shape is generated using the method for generating a crystal of the uranium dioxide with the use of an aldehyde according to the present invention in which the hydrothermal reaction of aqueous uranium nitrate (IV) solutions to which the acetaldehyde is added is proceeded at 390 degrees Celsius;
Figure 7 is a diagram showing a result of electron microscope (SEM) analysis, the result is obtained by using the method for generating a crystal of the uranium dioxide with the use of an aldehyde according to the present invention in which the hydrothermal reaction of aqueous uranium nitrate (IV) solution to which the acetaldehyde is added added is proceeded at 300 degrees Celsius;

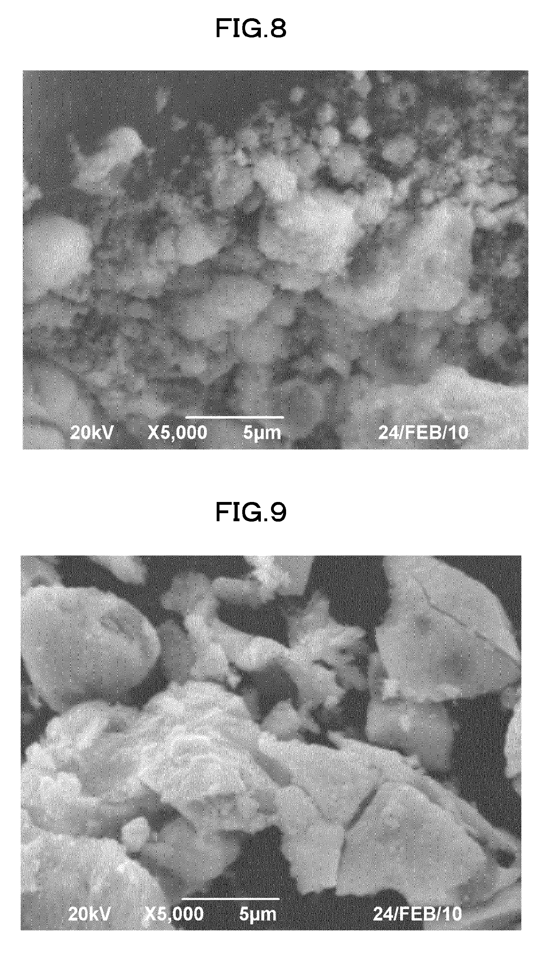

Figure 8 is a diagram showing a result of electron microscope (SEM) analysis, the result is obtained by using the method for generating a crystal of the uranium dioxide with the use of an aldehyde according to the present invention in which the hydrothermal reaction of aqueous uranium nitrate (IV) solution to which the acetaldehyde is added is proceeded at 200 degrees Celsius;
Figure 9 is a diagram showing a result of electron microscope (SEM) analysis, the result is obtained by using the method for generating a crystal of the uranium dioxide with the use of an aldehyde according to the present invention in which the hydrothermal reaction of aqueous uranium nitrate (IV) solution to which the acetaldehyde is added is proceeded at 170 degrees Celsius;

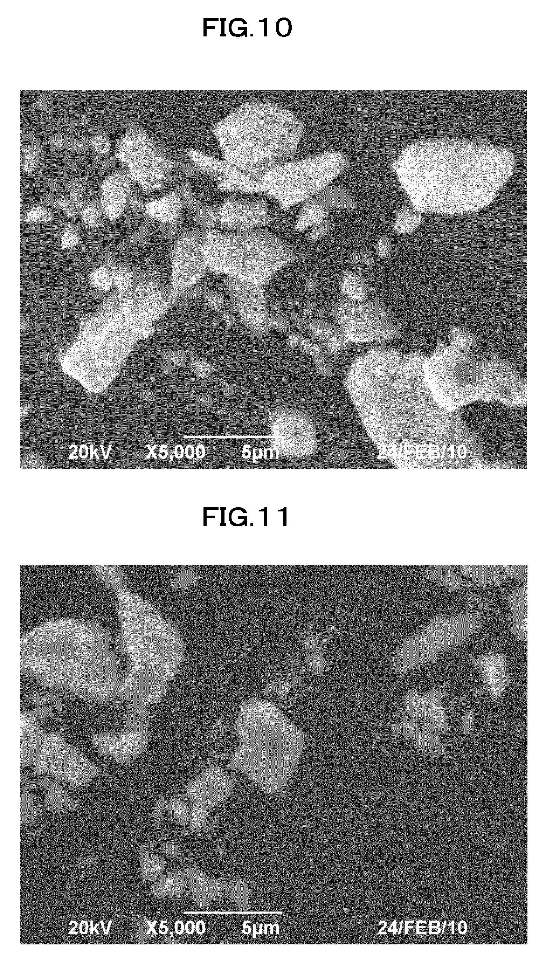

Figure 10 is a diagram showing a result of electron microscope (SEM) analysis, the result is obtained by using the method for generating a crystal of the uranium dioxide with the use of an aldehyde according to the present invention in which the hydrothermal reaction of aqueous uranium nitrate (IV) solution to which the acetaldehyde is added is proceeded at 140 degrees Celsius;
Figure 11 is a diagram showing a result of electron microscope (SEM) analysis, the result is obtained by using the method for generating a crystal of the uranium dioxide with the use of an aldehyde according to the present invention in which the hydrothermal reaction of aqueous uranium nitrate (IV) solution to which the acetaldehyde is added is proceeded at 100 degrees Celsius;

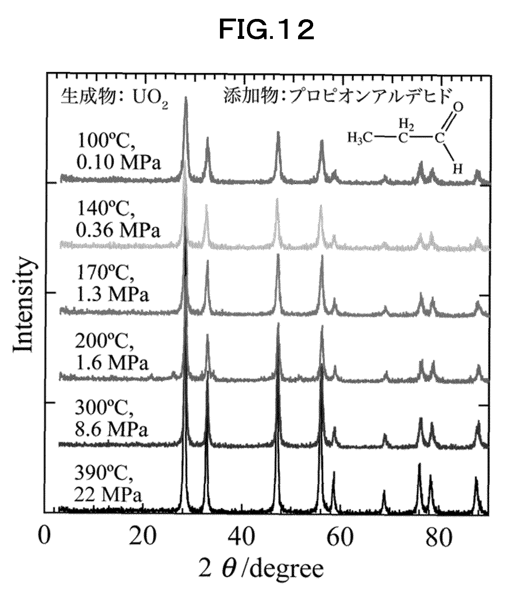

Figure 12 is a diagram showing a result of X-ray diffraction analysis, the result showing that the crystalline uranium dioxide having a fluorite type crystal structure is generated by using the method for generating a crystal of the uranium dioxide with the use of an aldehyde according to the present invention in which the hydrothermal reaction is proceeded under various conditions of aqueous uranium nitrate (IV) solution to which the propionaldehyde is added;

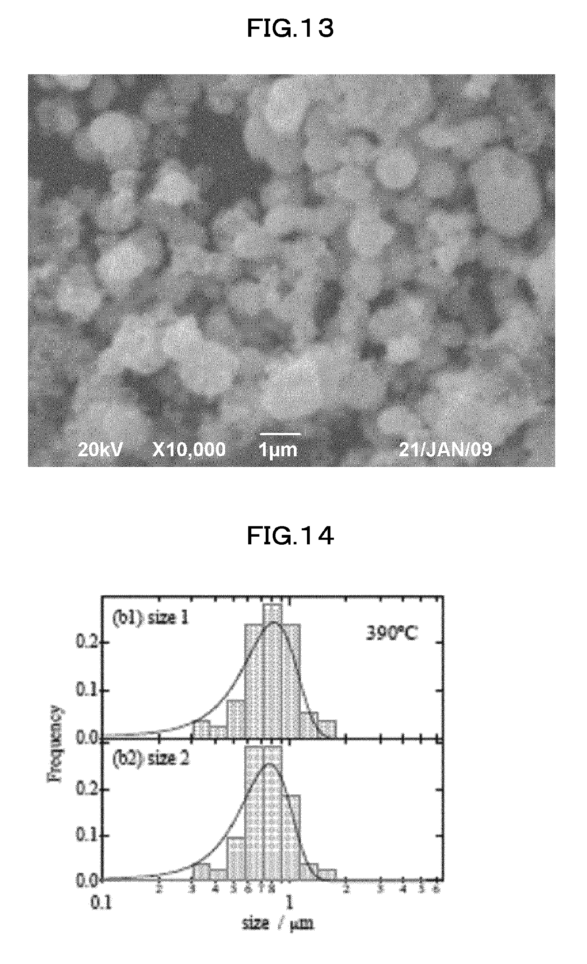

Figure 13 is a diagram showing a result of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the propionaldehyde is added is proceeded at 390 degrees Celsius;
Figure 14 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the propionaldehyde is added is proceeded at 390 degrees Celsius;

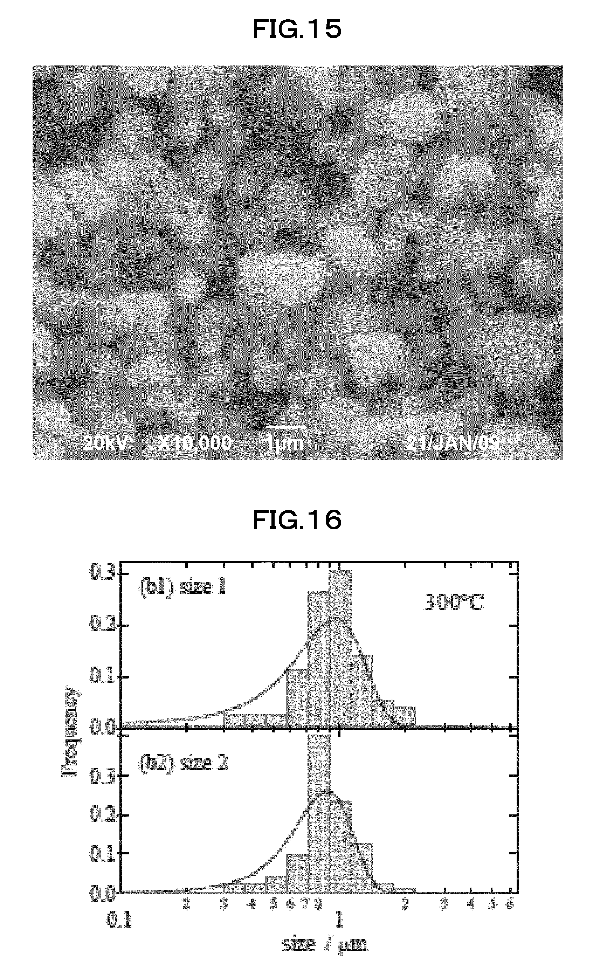

Figure 15 is a diagram showing a result of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the propionaldehyde is added is proceeded at 300 degrees Celsius;
Figure 16 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the propionaldehyde is added is proceeded at 300 degrees Celsius;

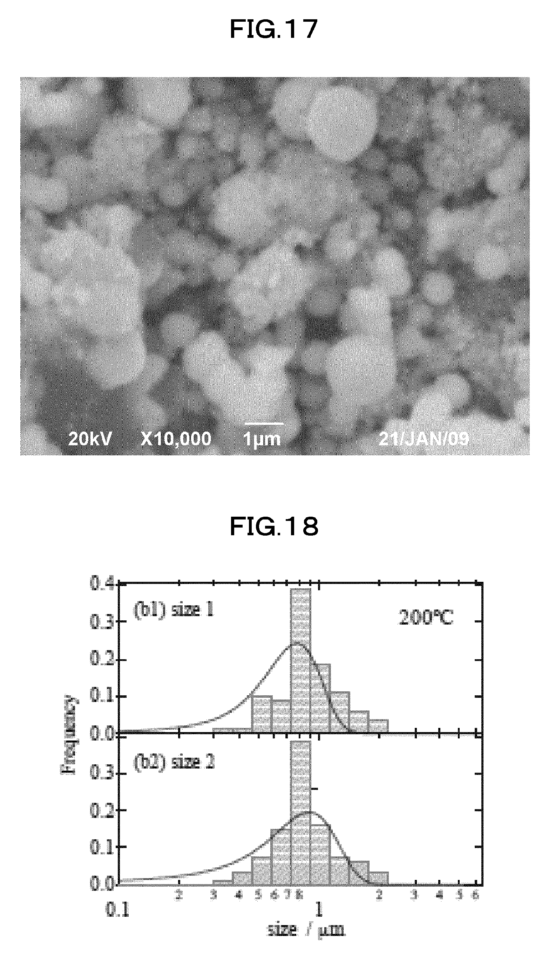

Figure 17 is a diagram showing a result of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the propionaldehyde is added is proceeded at 200 degrees Celsius;
Figure 18 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the propionaldehyde is added is proceeded at 200 degrees Celsius;

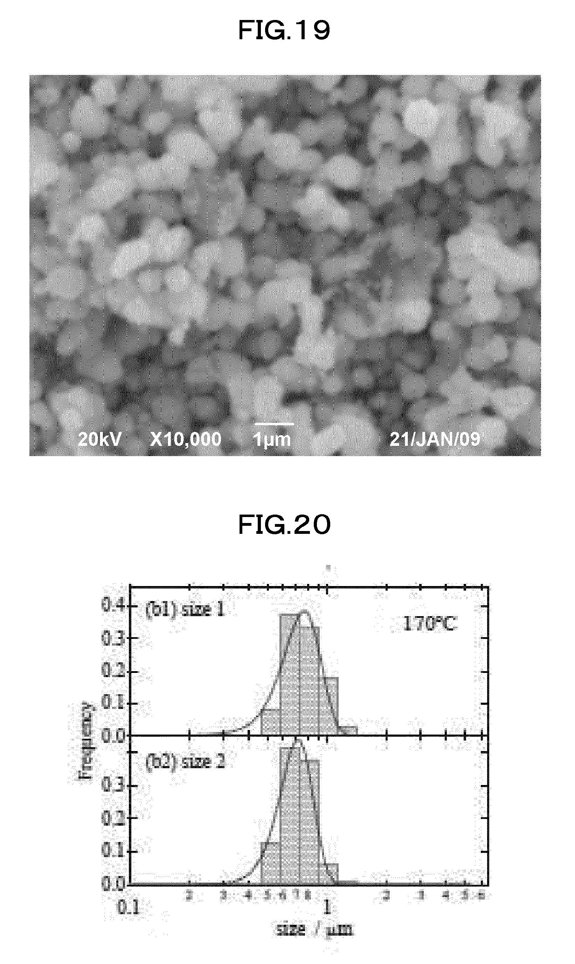

Figure 19 is a diagram showing a result of electron microscope (SEM) analysis, the result showing that a crystal of uranium dioxide having a spherical shape is generated by using the method for generating a crystal of the uranium dioxide with the use of an aldehyde according to the present invention in which the hydrothermal reaction of aqueous uranium nitrate (IV) solutions to which the propionaldehyde is added is proceeded at 170 degrees Celsius;
Figure 20 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the propionaldehyde is added is proceeded at 170 degrees Celsius;

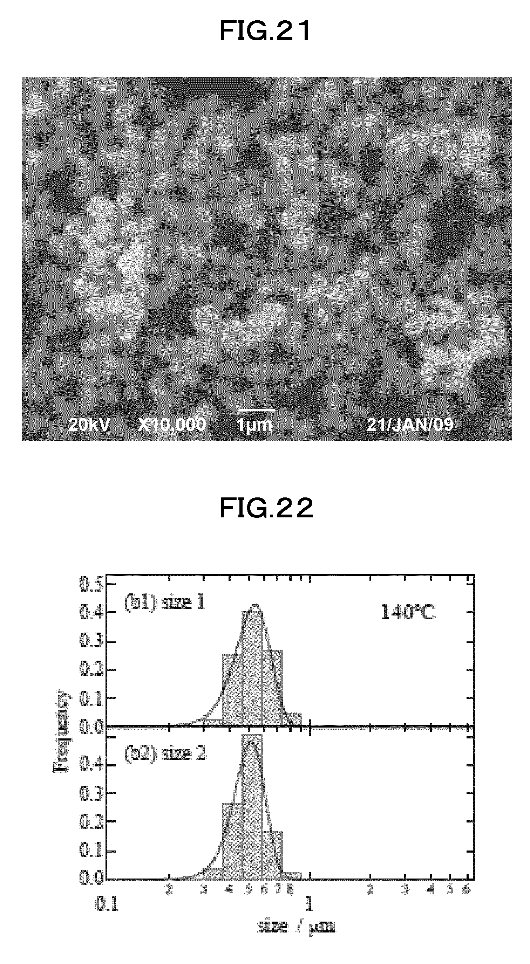

Figure 21 is a diagram showing a result of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the propionaldehyde is added is proceeded at 140 degrees Celsius;
Figure 22 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the propionaldehyde is added is proceeded at 140 degrees Celsius;

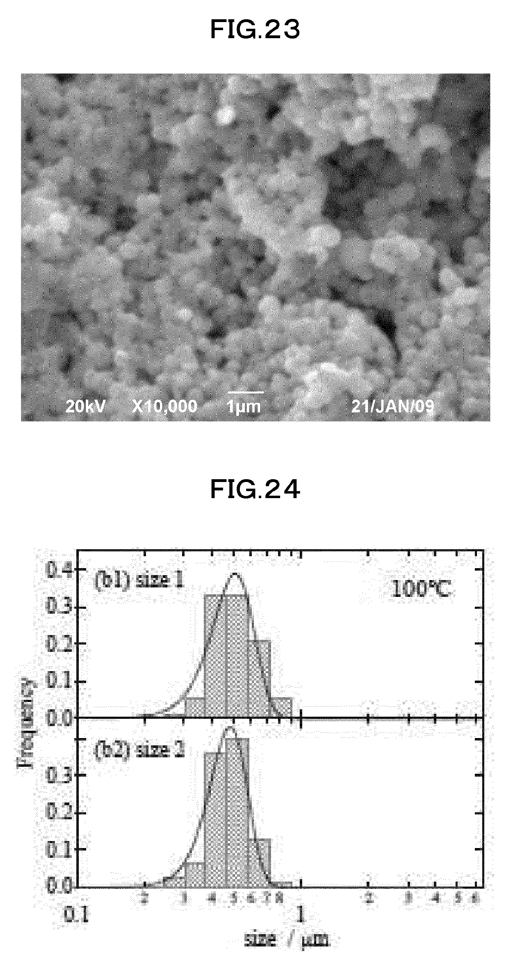

Figure 23 is a diagram showing a result of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the propionaldehyde is added is proceeded at 100 degrees Celsius;
Figure 24 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the propionaldehyde is added is proceeded at 100 degrees Celsius;

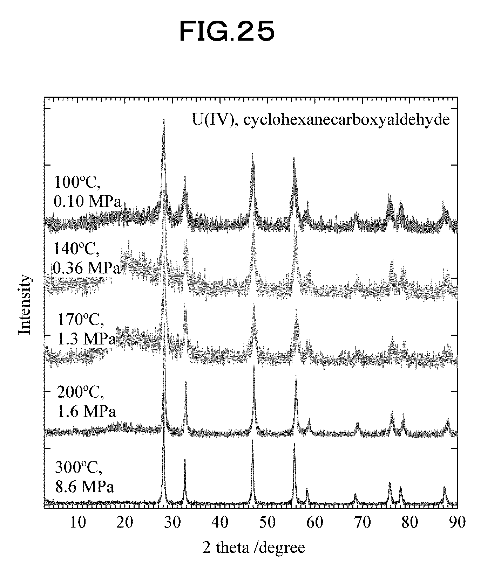

Figure 25 is a diagram showing a result of X-ray diffraction analysis, the result showing that the crystalline uranium dioxide having a fluorite type crystal structure is generated using the method for generating a crystal of the uranium dioxide with the use of an aldehyde according to the present invention in which the hydrothermal reaction is proceeded under various conditions of aqueous uranium nitrate (IV) solution to which the cyclohexane carboxylic aldehyde is added;

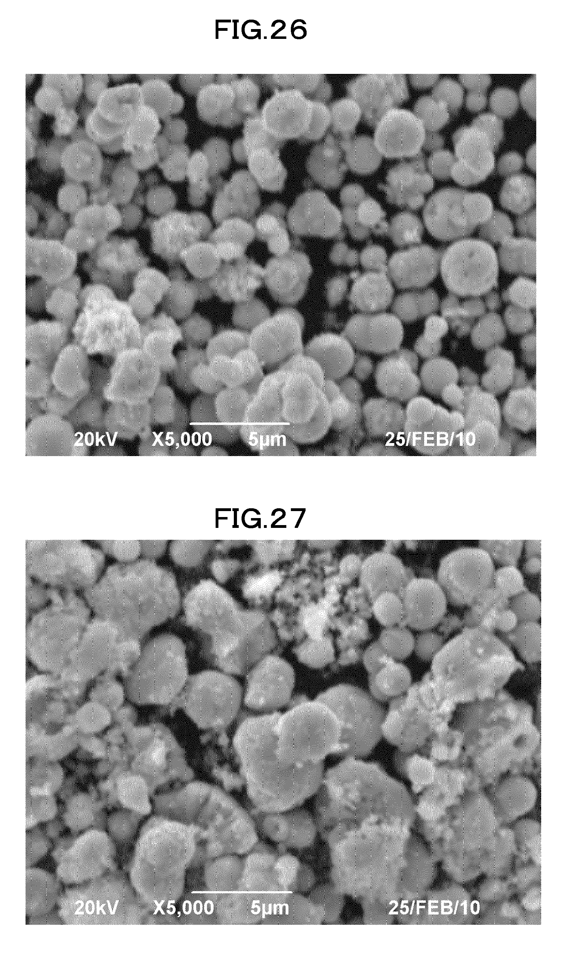

Figure 26 is a diagram showing a result of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the cyclohexane carboxylic aldehyde is added is proceeded at 100 degrees Celsius;
Figure 27 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the cyclohexane carboxylic aldehyde is added is proceeded at 200 degrees Celsius;

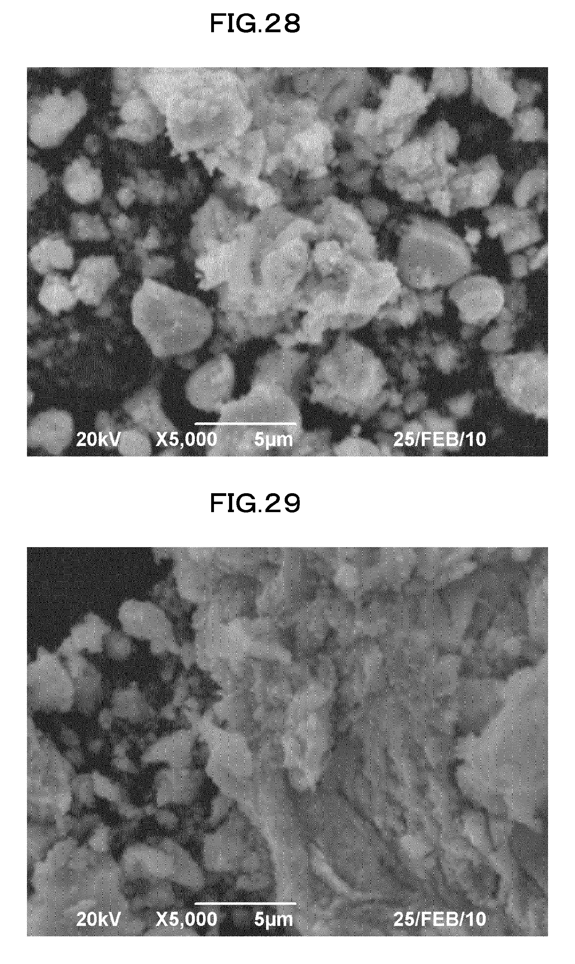

Figure 28 is a diagram showing a result of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the cyclohexane carboxylic aldehyde is added is proceeded at 170 degrees Celsius;
Figure 29 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the cyclohexane carboxylic aldehyde is added is proceeded at 140 degrees Celsius;

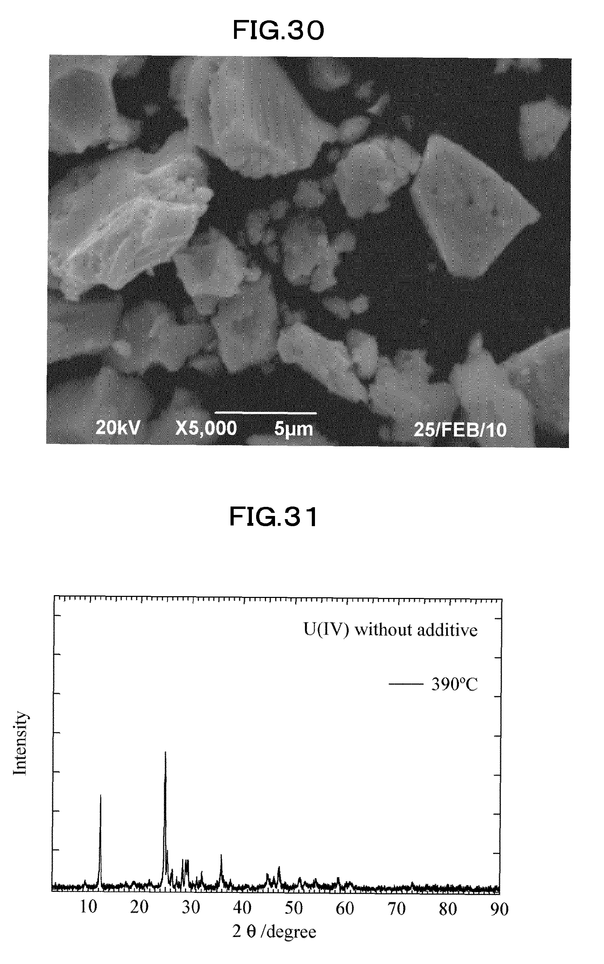

Figure 30 is a diagram showing the distribution of sizes of particles generated by using the method for generating a crystal of the uranium dioxide with the use of an aldehyde according to the present invention in which the hydrothermal reaction of aqueous uranium nitrate (IV) solution to which the cyclohexane carboxylic aldehyde is added is proceeded at 100 degrees Celsius;
Figure 31 is a diagram showing a result of X-ray diffraction analysis of the product generated using the method for generating a crystal of the uranium dioxide with the no use of an aldehyde according to the present invention in which the hydrothermal reaction of aqueous uranium nitrate (IV) solution to which no aldehyde is added is proceeded at 390 degrees Celsius;

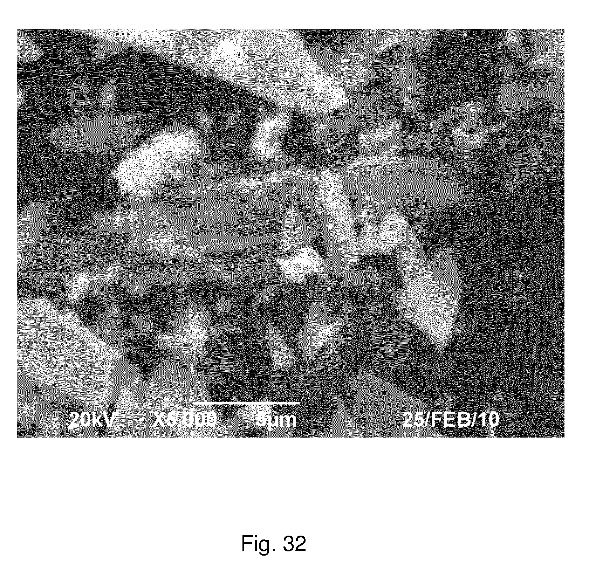

Figure 32 is a diagram showing the distribution of sizes of particles generated by using the method for generating a crystal of the uranium dioxide with the use of an aldehyde according to the present invention in which the hydrothermal reaction of aqueous uranium nitrate (IV) solution to which no aldehyde is added is proceeded at 390 degrees Celsius;

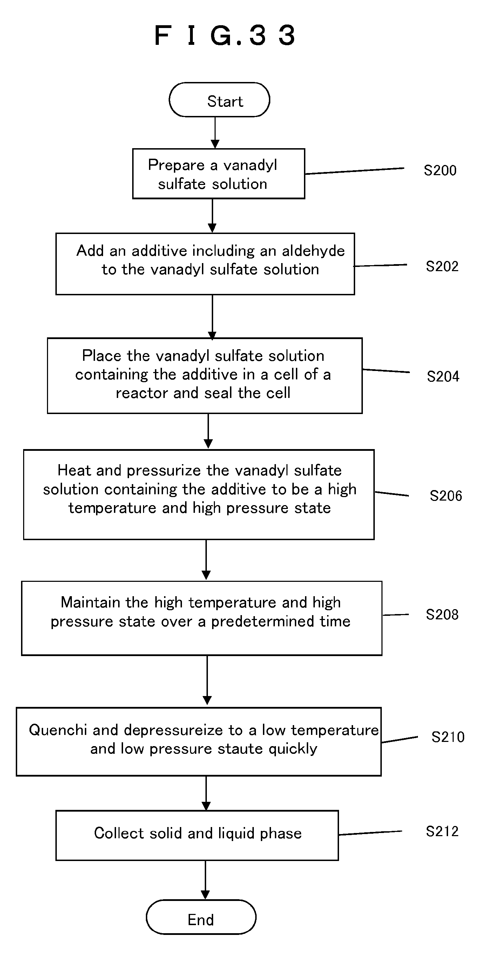

Figure 33 is a flowchart illustrating a method for generating the vanadium trioxide (V₂O₃);

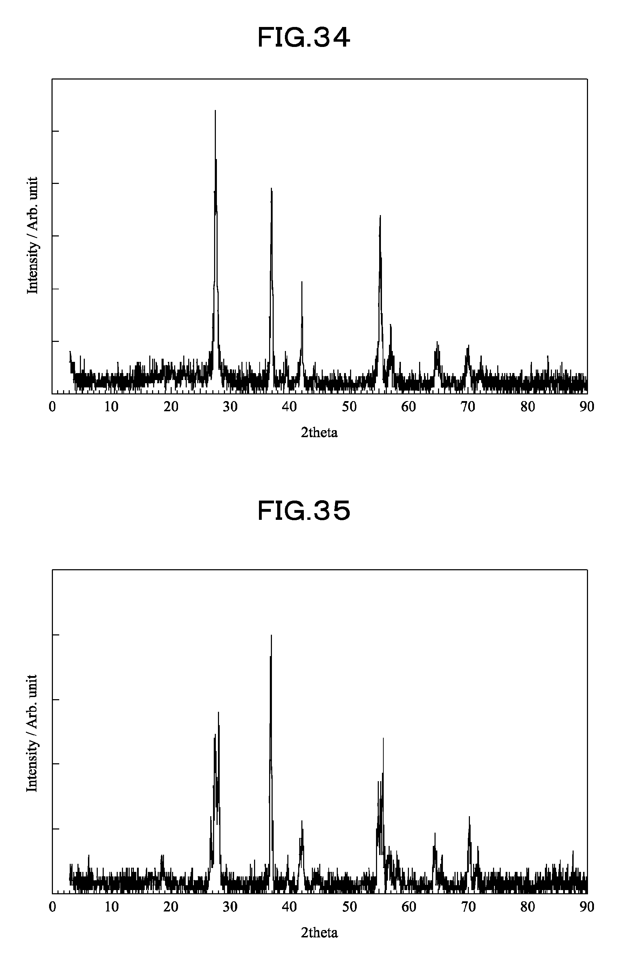

Figure 34 is a diagram showing a result of X-ray diffraction analysis of a product generated by the hydrothermal reaction (450 degrees Celsius, 30 min) of vanadyl (IV) sulfate aqueous solution, the result showing the product is the vanadium dioxide (VO₂);
Figure 35 is a diagram showing a result of X-ray diffraction analysis of a product generated by the hydrothermal reaction (450 degrees Celsius, 30 min) of vanadyl (IV) sulfate aqueous solution, the result showing the product is the vanadium dioxide (VO₂);

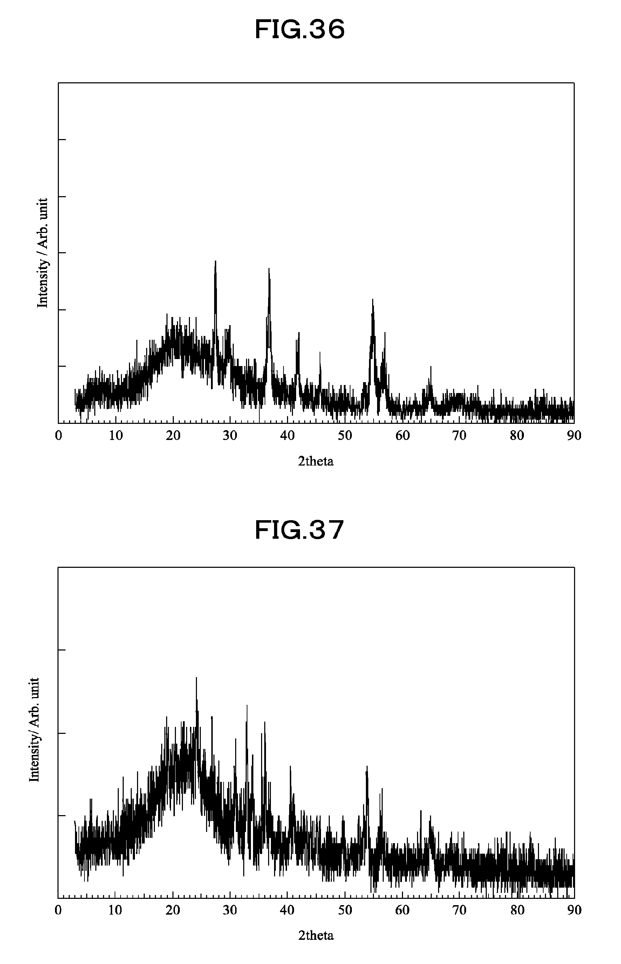

Figure 36 is a diagram showing a result of X-ray diffraction analysis of a product generated by the hydrothermal reaction (390 degrees Celsius, 30 min) of vanadyl (IV) sulfate aqueous solution to which sodium nitrate is added, the result showing the product is the vanadium dioxide (VO₂);
Figure 37 is a diagram showing a result of X-ray diffraction analysis of a product generated by the hydrothermal reaction (390 degrees Celsius, 30 min) of vanadyl (IV) sulfate aqueous solution to which propionaldehyde is added, the result showing the product is the vanadium dioxide (VO₂);

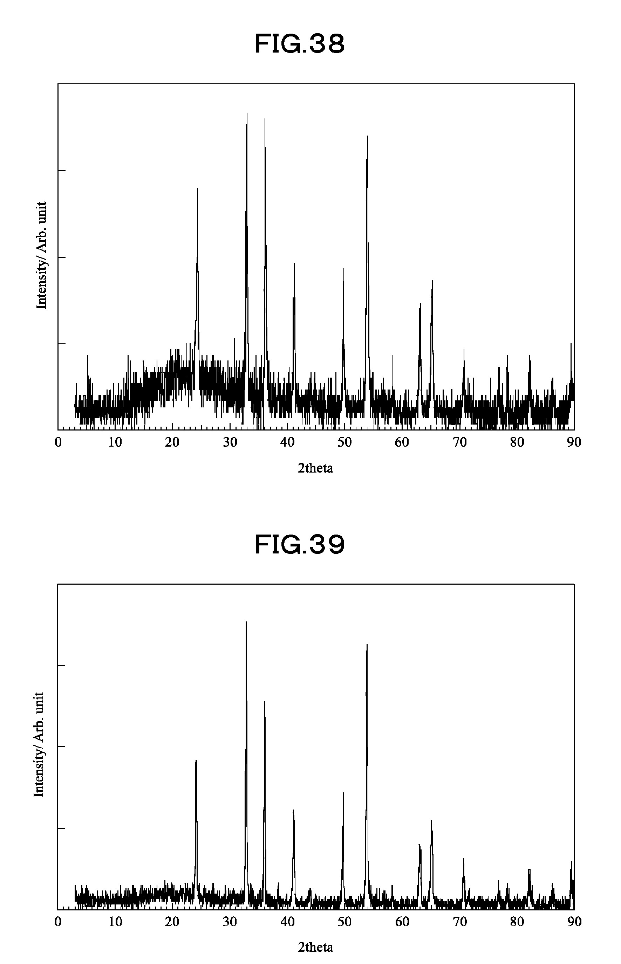

Figure 38 is a diagram showing a result of X-ray diffraction analysis of a product generated by the hydrothermal reaction (390 degrees Celsius, 30 min) of vanadyl (IV) sulfate aqueous solution to which propionaldehyde is added, the result showing the product is the vanadium trioxide (V₂O₃);
Figure 38 is a diagram showing a result of X-ray diffraction analysis of a product generated by the hydrothermal reaction (390 degrees Celsius, 30 min) of vanadyl (IV) sulfate aqueous solution to which the cyclohexane aldehyde is added, the result showing the product is the vanadium trioxide (V₂O₃);
Figure 40 is a diagrams showing a product generated by the hydrothermal reaction (390 degrees Celsius, 30 min) of vanadyl (IV) sulfate aqueous solution to which the sodium nitrate and the ethanol are added is the vanadium trioxide (V₂O₃) (top). However, hydrothermal synthesis reaction at 350 degrees Celsius for 30 minutes is insufficient to generate the vanadium trioxide (V₂O₃) (bottom);
Figure 41 is a diagrams showing a product generated by the hydrothermal reaction (390 degrees Celsius, 30 min) of vanadyl (IV) sulfate aqueous solution to which the sodium nitrate and the propionaldehyde are added is the vanadium trioxide (V₂O₃) with a suppressed impurity mixing;
Figure 42 is a diagrams showing a product generated by the hydrothermal reaction (390 degrees Celsius, 30 min) of vanadyl (IV) sulfate aqueous solution to which the sodium nitrate and the propionaldehyde or cyclohexane carboxylic aldehyde are added

### DESCRIPTION OF EMBODIMENTS

### (General description)

In order to solve the problems described above, one embodiment of a method for using an aldehyde according to the present invention includes mixing the aldehyde with an aqueous solution containing a metal ion, placing the mixture under high temperature and high pressure, and cooling the mixture to generate a particle of actinide oxide.

While, in high pressure and high temperature water, a high solubility for the solute may be obtained, a decrease of the dielectric constant may lead to low solubility of the metal oxide, hence it is possible to generate a metal oxide particle.

In addition, there is a feature that under the high-temperature and high-pressure water condition, very large thermal conductivity can be obtained compared to the liquid phase, and a large diffusion coefficient can be obtained compared to the vapor phase. Therefore, a uniform reaction conditions in the reactor can be realized to suppress the increase in the variation in particle shape and particle size distribution, due to variations in temperature gradient, pressure gradient, and concentration.

Let M be a metal ion, A be an anion such as the N03-, C032-, a hydrothermal synthesis reaction including a hydrolysis reaction (6), an oxidation reaction (7), and a dehydration reaction (8) proceeds:
[4]

MA₄ + 4H₂O = M (OH)₄ + 4HA (6)

M (OH)₄ = MO_{y}(OH)_{z(1-y)} = MO_{z}+ 2H₂O (7)

MO₂ + 2H₂O = MO₂ + 2H₂O (8)

That is, the "high temperature and high pressure" in this embodiment, may be characterized as the temperature and pressure sufficient to make the hydrothermal synthesis reaction including the hydrolysis reaction (6), the oxidation reaction (7), and the dehydration reaction (8) proceed.

In this embodiment of a method for using an aldehyde according to the present invention, the method including mixing the aldehyde with an aqueous solution containing a metal ion, placing the mixture under high temperature and high pressure, and cooling the mixture to generate a metal oxide particle, the aldehyde functions as an additive.

And "additive" as used herein is a chemical reagent used in the reaction to control or select chemical properties, such as chemical structure, chemical composition, of the reaction product, or the like, to control or select the physical characteristics such as the size, the outer shape of the reaction product.

According to a method for using aldehyde according to the present embodiment, the aldehyde may be a catalyst to reduce the activation energy of the process into the oxide under high pressure and temperature in the production of fine particles of crystalline metal oxides, and further the aldehyde may have a function as a template to promote crystal formation during crystal formation.

In order to solve the problems described above, one embodiment of a method for using an aldehyde according to the present invention includes mixing the aldehyde with an aqueous solution containing a tetravalent actinide ion or a tetravalent actinide complex, placing the mixture under high temperature and high pressure the mixture, and cooling the mixture to generate a particle of actinide oxide.

In general, "actinides" here refers to 15 elements including actinium, thorium, protactinium, uranium, neptunium, plutonium, americium, curium, berkelium, californium, Ainsworth Thailand salts, fermium, mendelevium, nobelium, and lawrencium. In particular, the actinide refers to thorium, uranium, neptunium, plutonium, americium, curium which may be used in the use of fission power.

And, "aldehyde" herein may be an organic compound having an aldehyde group.

In general, the actinides can have a different oxidation number from 4. For example, in the case of uranium, in addition to uranium dioxide, there are triuranium octoxide, uranium trioxide and the like.

In general, the actinide such as thorium, protactinium, uranium, neptunium, plutonium, americium, curium may form the actinide dioxide having a fluorite-type crystal structure. Thus, in the present application, the "actinide oxide having a fluorite-type crystal structure" includes actinide dioxide.

Thus, the "actinide oxide with a fluorite-type crystal structure" includes thorium dioxide, protactinium dioxide, uranium dioxide, neptunium dioxide, plutonium dioxide, americium dioxide and curium dioxide.

In this embodiment, the shape of an actinide oxide particle including a crystalline particle of the actinide oxide may have any one of rectangular parallelepiped shape, spherical shape, and cubic shape.

Actinide oxide particles also have almost uniformly aligned particle sizes.

According to this embodiment, in a method that includes mixing an aldehyde with an aqueous solution containing a tetravalent actinide ion or a tetravalent actinide complex, placing the mixture under high temperature and high pressure the mixture, and cooling the mixture to generate a particle of actinide oxide, the aldehyde functions as an additive.

If the oxidation number of an actinide ion or an actinide complex in an actinide aqueous solution is 4, let M be a metal ion, A be an anion such as the NO₃⁻, CO₃²⁻, a hydrothermal synthesis reaction including a hydrolysis reaction (9), an oxidation reaction (10), and a dehydration reaction (11) proceeds:
[5]

XA₄ + 4H₂O = X (OH)₄ + 4HA (9)

X (OH)₄ = XO_{y}(OH)_{2(1 - y)} = XO₂ + 2 H₂O (10)

XO₂ + ₂H₂O = XO₂ + 2H₂O (11)

after adding an aldehyde in the actinide aqueous solution and placing the mixture under the high temperature and high pressure environment, as in (6) to (8) above. That is, the "high temperature and high pressure" in this embodiment, may be characterized as the temperature and pressure sufficient to make the hydrothermal synthesis reaction including the hydrolysis reaction (9), the oxidation reaction (10), and the dehydration reaction (11) proceed. A typical temperature at the hydrothermal synthesis reactions proceed is 100 degrees Celsius to 300 degrees Celsius. the functions of the aldehyde as the additive may include avoiding to oxide the actinide ion or actinide complex having an oxidation number 4 to an actinide ion or actinide complex having an oxidation number greather than 4, and/or promoting the progress of the oxidation reaction (10).

In addition, the state of "high-temperature and high-pressure" may be a state adjacent to a subcritical fluid state or a supercritical fluid state in a phase diagram, and the state of "high-temperature and high-pressure" may be a state away from the state of the subcritical or supercritical fluid state, for example, a state having a temperature lower than that of the subcritical fluid state or the supercritical fluid state in the phase diagram.

In general, the material takes three states of matter that are referred to as gas, liquid, and solid depending on temperature and pressure.
the upper limit of temperature and pressure at which a phase transition between the liquid and gas may occur is referred to as the gas-liquid critical point or critical point. States beyond this critical point is referred to as a supercritical state. A gas in the supercritical state can not reach a liquid state by definition, but reach a fluid having a higher density. For example, the critical temperature of water is 347 degrees Celsius and the critical pressure of water is 22.1 MPa, and then condensation may not occur so that supercritical water may be obtained.

The features of supercritical fluid include:
(1) Hydrothermal synthesis reaction speed is very high,
(2) dielectric constant is small, and
(3) ion product is small.
In general, if it is the same temperature, lower dielectric constant may lead to make a hydrothermal synthesis reaction proceed easily. Further, in general, since the dielectric constant solubility is small, in the supercritical fluid is very low actinide oxide. In other words, while a hydrothermal synthesis reaction proceeds rapidly in the supercritical fluid, since an actinide oxide, that is a product of hydrothermal synthesis reaction, has low solubility, a high degree of supersaturation can be obtained. The high degree of supersaturation means that nucleation rate is large and supercritical fluid is a suitable field to synthesize an actinide oxide particle.

A subcritical fluid is present in a state between the liquid phase and the supercritical state in the phase diagram. The features of the subcritical fluid include:
(1) ion product is small.
A large ion product means the hydrolysis reaction may proceed easily.

In the suprecritical or subcritical water conditions, dissociation of water is increased greatly and it acts as a strong acid, the hydrolysis reaction and the metathesis reaction of metal salts proceeds very easily. Moreover, since the physical properties of the fluid such as ion product, dielectric constant, diffusion rate, thermal conductivity, are changed significantly under the subcritical or supercritical conditions, it is easy to control the size and/or shape of a metal oxide particle by controlling the reaction rate and reaction pathway. In addition, there is a feature that under the subcritical or supercritical conditions the diffusion coefficient can be increased to a very large value compared to a value in the liquid phase since the thermal conductivity is large compared to the vapor phase, supercritical conditions, when compared to subcritical or liquid. Therefore, the reaction conditions in a reactor can become to be uniform do that we can suppress the increase of the variation in particle shape and in the particle size distribution due to variations in temperature gradient, pressure gradient, and concentration.

When an aldehyde is added to an actinide aqueous solution, a hydrothermal synthesis reaction described above may proceed and the size and shape of the crystal of the oxide actinide may be controlled because aldehyde also functions as a surface modifier.

That is, an aldehyde may be chemically bonded to the surface of the nucleus of the actinide oxide that is generated as a result of the nucleation process in an actinide aqueous solution, and the size and shape of the crystal of an actinide oxide can be controlled in the process of crystal growth that occurs subsequent to the nucleation process.

According to the use of aldehydes that includes mixing the aldehyde with an aqueous solution containing a tetravalent actinide ion or a tetravalent actinide complex, and placing the mixture under high temperature and high pressure the mixture, to make a hydrothermal synthesis reaction proceed and to function as a surface modifier, therefore an actinide oxide crystal or actinide oxide particle having a predetermined size and shape, and a fluorite-type crystal structure may be generated selectively.

In the present embodiment, the aldehyde aqueous solution to which an actinide is added may also contain a strong oxidizing nitrate.

According to the use of an aldehyde of the the present embodiment, the aldehyde functions as a catalyst for reducing the activation energy of the oxidation process in the production process of a fine particle of an actinide oxide crystal, and a template for forming a crystal for promoting the process of crystal formation, and further the aldehyde has a function of a additive for the preparation of selectively further desired actinide oxides.

In order to solve the problems described above, one embodiment of a method for using an aldehyde according to the present invention includes mixing the aldehyde with an aqueous solution containing a tetravalent uranium ion, placing the mixture under high temperature and high pressure the mixture, and cooling the mixture to generate a particle of uranium dioxide selectively.

As described in the section Background Art, when the hydrothermal synthesis reaction is carried out for a long reaction time at a temperature higher than the supercritical temperature of water using a nitrate uranium containing tetravalent uranium ions U4+, it is known that trioxide uranium (U03) is obtained as a product if no organic matter is added, and a product including hexavalent uranium ions U6+ is obtained if methanol or ammonium carbonate is added as an additive. That is, under the presence of nitrate that has oxidizing power, tetravalent uranium ions U4+ are oxidized to hexavalent uranium ions U6+ via hydroxide. Further, a product that is obtained when ethanol or hexylamine is added as an additive is U(OH)4. these experimental facts show that these additives have reduction power sufficient to reduce tetravalent uranium ion U4+ to hexavalent uranyl ion U6+, but not to have reduction power sufficient to make the oxidation reaction (7) proceed even in the supercritical fluid.

However, in addition to the aldehyde as an additive to the nitrate uranium containing uranium ions U4 + tetravalent, and subjected to hydrothermal synthesis reaction with reaction times long enough at a temperature exceeding the temperature of supercritical water as a product uranium dioxide (U02) is obtained.

The hydrothermal synthesis reaction may be allowed to proceed under a state adjacent to a subcritical fluid or supercritical fluid phase in the phase diagram, and the hydrothermal synthesis reaction may be allowed to proceed under a state away from to a subcritical fluid or supercritical fluid phase in the phase diagram, for example, at a temperature lower than that of subcritical fluid or supercritical fluid.

According to the use of aldehydes according to the present embodiment, the aldehyde is a catalyst to reduce the activation energy of the process into the oxide under high pressure and temperature in the production of fine particles of crystalline uranium dioxide, to selectively uranium dioxide further having a use as an additive for the production. In addition, the aldehyde may serve as a template to promote crystal formation during crystal formation.

In order to solve the above problems, another embodiment of the method for using an aldehyde according to the present invention includes acetaldehyde represented by the following formula I, 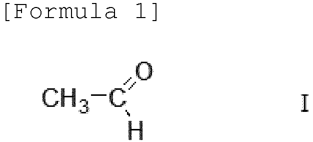 propionaldehyde represented by the following formula II, 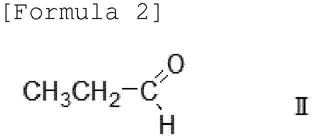 cyclohexane carboxylic aldehyde represented by the following formula III. 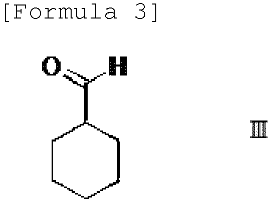 In order to solve the above problems, another embodiment of the method for using an aldehyde according to the present invention, a high temperature and high pressure state is characterized in that the temperature and/or the pressure are lower than those of the supercritical state or subcritical state of the water.

Supercritical condition of the water is a state having a temperature and a pressure higher beyond the critical point, where the critical temperature of water is 374 degrees Celsius, the critical pressure of water is 22.0 MPa. A state having a temperature and/or a pressure slightly lower than those of the critical point is called as a subcritical state.

According to the use of aldehydes according to the present embodiment, the aldehyde is a catalyst to reduce the activation energy of the process into the oxide under high pressure and temperature in the production of fine particles of crystalline uranium dioxide, to selectively uranium dioxide further having a use as an additive for the production. In addition, the aldehyde may serve as a template to promote crystal formation during crystal formation.

In order to solve the above problems, another embodiment of an use of an aldehyde according to the present invention, an actinide oxide particle such as a uranium dioxide particle has at least one of a predetermined shape and a predetermined size to.

In general, "predetermined shape" herein may be rectangular, spherical, cubic including plate-shaped, elliptical, polyhedral, bell-proof, or the like.

And, "predetermined size" herein may be characterized a size of a fine or a superfine particle that is defined as a particle having a size of order of micrometers.
In general, "fine particle" may be defined as a particle having a particle diameter of 1 to 1000 micrometers. "superfine particle" may be defined as a particle having a particle diameter of 1 to 1000 nanometers.

In particular, in the present application, the "predetermined size" may be referred to as a value of the order of 1 to 100 micrometers. Actinide oxide particle such as a uranium dioxide particle may be suitable as a raw material for nuclear fuel, especially in power generation using nuclear fission.

In order to solve the above problems, another embodiment of an use of an aldehyde according to the present invention, the actinide oxide particles is used as the nuclear fuel used in power generation using nuclear fission.

That is, in the present application, "actinide oxides" may be used in power generation using nuclear fission. In particular, the actinide oxides may be used as fuel, or may be used for the preparation of the control rod for the fission of nuclear fuel.

In order to solve the problems described above, another embodiment of a method for using an aldehyde according to the present invention includes mixing the aldehyde with an aqueous solution containing an actinide ion or an actinide complex having an oxidation number greater than the value of 4, placing the mixture under high temperature and high pressure the mixture to make reduction reaction of the actinide ion or the actinide complex and subsequent oxidation reaction proceed for generating a particle of actinide oxide.

In order to solve the problems described above, one embodiment of a method for using an aldehyde according to the present invention includes placing an uranyl(VI) nitrate containing a tetravalent uranium ion to make reduction reaction of the tetravalent uranium ion and subsequent oxidation reaction proceed for generating a particle of uranium dioxide selectively.

In order to solve the above problems, an embodiment of the method for generating an actinide oxide particle includes mixing a high temperature and high pressure fluid that is obtained by heating and pressurizing water with a pressurized aqueous solution that is obtained by pressurizing a mixture of a tetravalent actinide ion or a tetravalent actinide complex and the aldehyde.

Using a high-temperature and high-pressure water as the high-temperature and high-pressure fluid, high-temperature and high-pressure may have the density of about 350kg/m3 and the actinides aqueous solution may have the density of about 1000kg/m3. Such a fluid mixture that is generated by mixing solutions can easily form a turbulent state according to the studies by the inventors of the present invention. However, according to the present embodiment, the fluid mixture may not form a turbulent state easily and may form a laminar flow, thereby ensuring to mix the high-temperature and high-pressure water and aqueous actinides.

According to this method, even if an actinide aqueous solution containing the aldehyde and a high temperature and high pressure fluid are mixed, the Reynolds number of the resulting fluid may not become to be high and the resulting fluid may not form a turbulent flow. Hence, the high temperature and high pressure fluid and actinide aqueous solution containing an organic material may be mixed reliably, the hydrothermal synthesis reaction may proceed continuously a predetermined shape and a predetermined size, and therefore an actinide oxide crystal or actinide oxide particle having a predetermined size and shape, and a fluorite-type crystal structure may be generated selectively.

In order to solve the problems described above, one embodiment of a method for using an aldehyde according to the present invention includes mixing the aldehyde with an aqueous solution containing a salt and a vanadium dioxide ion, and placing the mixture under high temperature and high pressure the mixture, and cooling the mixture to generate vanadium trioxide.

That is, according to the use of aldehydes of the present invention, starting from an aqueous solution of vanadyl sulfate, for example, vanadium trioxide particles (V₂O₃) may be generated by making a hydrothermal synthesis reaction proceed under a temperature of 350 degrees Celsius. In such processes the reduction reaction (12), the hydrolysis reaction (13), and the oxidation reaction (14) may be proceed. Because it may be considered the hydroxide V(OH)₃ may be precipitated quite easily, the hydrolysis reaction (13) and the oxidation reaction (14) is an intermediate process between a homogeneous and an inhomogeneous reaction.
[6]

VO₂⁺→V₃⁺ (12)

V₃⁺ + 3 OH⁻ → V(OH)₃ (13)

2V (OH)₃ →V₂O₃ (s) + 3H₂O (14)

In this way, by using an aldehyde,
under the low temperature and low pressure,
a mixed oxide having a suppressed impurity mixture may be generated.

Further, when vanadyl sulfate is used as a starting material in the preparation of the particles vanadium trioxide (V203), it is possible to suppress the generation of hydrogen sulfide is a toxic substance.

(A detailed description of the illustrated embodiment)

### (First Embodiment)

A first embodiment of the use of the aldehyde according to the present invention will be described in detail. However, the present invention is not limited to the following embodiments of the present invention.

Referring to FIGs. 1-32, one embodiment of the method for using aldehyde to generate the actinide oxide particles having a fluorite-type crystal structure.

The present embodiment provides a method for generating a uranium dioxide from the aqueous uranyl.

Figure 1 is a schematic diagram of an apparatus 100 including a reactor (autoclave) and a temperature controller which are used to generate a crystal of an actinide oxide utilizing a method for using an aldehyde according to the present invention

The reaction apparatus 100 includes an autoclave (a reactor) 10 and a temperature controller 20. The reactor 10 includes a cell 12, a heating rods 14a, 14b, 14c, 14d, a cover plate 16, and a thermocouple 18.

The autoclave or the reactor 10 is made of one of nickel, manganese, carbon, Hastelloy that are formed from an alloy of iron and chromium. Outline of the reactor 10 is substantially rectangular, and includes a substantially square top and bottom and substantially rectangular sides. The cell 12 is formed from the top of the reactor 10 to the inside of the reactor 10. That is, the cell 12 includes an opening n the top of the reactor 10. In addition, the opening of the top of the cell 12 of the reactor 10 can be sealed by lid plate 16 airproofly. The diameter of the cells 12 is 14mm, and the depth is 70mm. The capacity of the cell 12 of the reactor 10 is 10 mL.

The four heating rods, 14a, 14b, 14c, 14d, are arranged to surround the cells 12. The four heating rods, 14a, 14b, 14c, 14d are connected to the temperature controller 20 to regulate the temperature inside the cell 12. These heating rods 14a, 14b, 14c, 14d, for example, can be heated to 450 degrees Celsius.

One end of the thermocouple 18 is disposed in a space inside the cell 12, and another end of the heating rods 14a, 14b, 14c, has been in contact with one of the heating rods 14a, 14b, 14c, 14d. In this arrangement, electric current is generated depending on the temperature difference between the temperature in the cell 12 and one of the heating rods 14a, 14b, 14c, 14d. The temperature control unit 20 detects the difference between the temperature in the cell 12 and the one of the heating rods 14a, 14b, 14c, 14d.

The temperature controller 20 controls the one of the four heating rods 14a, 14b, 14c, 14d to adjust the temperature in the cell 12 to a value input from outside.

After a liquid is injected into the cell 12 and then the cell 12 is sealed by the cover plate 16 airproofly, the temperature of the liquid can be increased by increasing the temperature of the four heating rods 14a, 14b, 14c, 14d to a high temperature region. When the liquid is evaporated as the temperature of the liquid becomes hot such that steam is generated, it is possible to increase the partial pressure of the liquid by the vapor. That is, a liquid contained in the cell 12 can be placed under a high temperature and high pressure environment.

Fig. 2 is a diagram illustrating time variation of temperature when the actinide solution of 3mL is housed to the cell 12 having 10mL capacity shown in Figure 1 and a temperature in the cell 12 is controlled using the temperature controller 20.

As shown in Fig. 2, the temperature controller 20 of this embodiment can control to rise the temperature in the cell 12 from the room temperature to 450 degrees Celsius within 10-20 minutes.

Figure 3 is a diagram showing a flowchart for generating a crystal of actinide oxide using the aldehyde according to the present invention

First, at S100, 2.7mL of an actinides aqueous solution is prepared. Specifically, water is added to 0.2mmol of an uranyl aqueous solution containing a uranium to prepare 2.7mL of the uranium aqueous solution. Then the process proceeds to S102.

At S102, an organic material is added to the actinide aqueous solution prepared at S100 to prepare 3mL of the uranyl aqueous solution containing the organic material. Aldehyde may be any one of acetaldehyde, propionaldehyde, cyclohexane carboxylic aldehydes. Then the process proceeds to S104.

At S104, the actinide aqueous solution containing the organic material is housed in the cell 12 of the reactor 100 shown in Fig. 1, and the opening of the cell 12 is covered by the cover plate 16 to seal the cell 12. Then the process proceeds to S106.

At S106, the actinide aqueous solution containing the organic material is heated and pressurized to change it to a high temperature and high pressure state. Specifically, the temperature controller 20 of the reaction apparatus 100 controls the heating rods, 14a, 14b, 14c, 14d to have, for example, 450 degrees Celsius of the temperature so that the aqueous solution in the cell 12 becomes to be hot. When the aqueous solution is evaporated as the temperature of the aqueous solution becomes hot such that steam is generated and the steam applies pressure on a interface between the aqueous solution and the vapor, it is possible to increase the partial pressure of the aqueous solution by the vapor. Then the process proceeds to S108.

At S108, the state reached at the S106 is maintained for a predetermined time, for example, 30 minutes. Then the process proceeds to S110.

At S110, the temperature of the reactor 10 is cooled quickly and the pressure of the reactor 10 is lowered such that the condition in the cell 12 becomes to be a low temperature and low pressure condition. A room temperature and atmospheric condition may be exemplified as the low temperature and low pressure condition. Then the process proceeds to S112.

At S112, the solid and liquid phases are collected, respectively. Uranium dioxide or cerium dioxide is deposited on the solid phase.

That is, a method for manufacturing an actinide oxide particle having a fluorite crystal structure according to the invention, the method including mixing an actinide solution and an organic material; placing the actinide solution mixed with the organic material under high temperature and high pressure environment; and cooling the actinide solution mixed with the organic material, includes;
(1) preparing the actinide solution;
(2) mixing an additive that includes an aldehyde into the actinide solution;
(3) adding water into the actinide solution including the additive to generate an additive-included actinide solution;
(4) placing the additive-included actinide solution in an autoclave;
(5) increasing the temperature in the autoclave in which the additive-included actinide solution is placed to a predetermined value;
(6) quenching the temperature in the autoclave in which the additive-included actinide solution is placed to a room temperature;
(7) collecting a solid phase in the additive-included actinide solution; and
(8) drying the collected solid phase under reduced pressure to retrieve the crystal of the actinide oxide.

According to the use of aldehydes that includes mixing the aldehyde with an actinide aqueous solution containing an organic material, and placing the mixture under high temperature and high pressure the mixture, an actinide oxide crystal or actinide oxide particle having a predetermined size and shape, and a fluorite-type crystal structure may be generated selectively.

Figure 4 is a diagram showing the reaction mechanism of hydrothermal synthesis in the method for generating the crystalline uranium dioxide using the aldehydes according to the present invention.

That is, under the presence of nitrate that has oxidizing power in a reaction path of the hydrothermal synthesis, the tetravalent uranium ion U4+ is oxidized to hexavalent uranium ions U6+, and trioxide uranium (UO₃) is obtained by the oxidation reaction (II) via hydroxide without mixing an aldehyde. On the other hand, when an additive such as an aldehyde exists, the tetravalent uranium ion U4+ is not oxidized so that the oxidation reaction (I) proceeds to generate a fine particle of crystalline uranium dioxide (UO₂). From the considerations, the aldehyde may be a catalyst to reduce the activation energy of the process into the oxide under high pressure and temperature in the production of fine particles of crystalline uranium dioxide, to selectively uranium dioxide further having a use as an additive for the production. In addition, the aldehyde may serve as a template to promote crystal formation during crystal formation.

### (Example 1)

Referring to FIGs. 5-11, an example of the method for generating a uranium dioxide particle according to the first embodiment will be explained. In this example, the additive is acetaldehyde.

In this example, at S100, 2mmol of ammonium carbonate is added to uranyl nitrate containing 0.2 mmol of the tetravalent uranium ion, and distilled water is further added to the mixture of the ammonium carbonate and the uranyl nitrate to prepare 2.7 mL of an uranyl nitrate aqueous solution. Then at S102, 0.3 mL of methanol is added to prepare 3 mL of the aqueous solution. At S104, this aqueous solution is housed in the cell, and the cell is sealed by covering the opening of the cell of the reactor 100. Then, at S106, the temperature controller 20 of the reaction apparatus 100 controls the heating rods, 14a, 14b, 14c, 14d to have 450 degrees Celsius of the temperature. Next, at S108, the state reached at the S106 is maintained for 30 minutes. At S110, the temperature of the reactor 10 is cooled quickly and the pressure of the reactor 10 is lowered such that the condition in the cell 12 becomes to be a low temperature and low pressure condition. And at S112, the solid phase is collected.

Figure 5 is a diagram showing a result of X-ray diffraction analysis, the result showing that the crystalline uranium dioxide having a fluorite type crystal structure is generated using the method for generating a crystal of the uranium dioxide with the use of an aldehyde according to the present invention in which the hydrothermal reaction is proceeded under various conditions of aqueous uranium nitrate (IV) solutions to which the acetaldehyde is added.

More specifically, it is a result of the X ray diffraction analysis applying to the dried solid phase recovered at S112. From this figure, the hydrothermal reaction proceeds for reaction time of 30 minutes at a temperature of 390 degrees Celsius, 300 degrees Celsius, 200 degrees Celsius, 170 degrees Celsius, 140 degrees Celsius, of 100 degrees Celsius, at S108, products collected in the S112 are found to be a uranium dioxide having a fluorite-type crystal structure.

Moreover, from this figure, the generated uranium dioxide includes uranium and oxygen and includes almost no impurities.

Figures 6-8 are a diagrams showing a result obtained by using electron microscope (SEM), the result showing that a crystal of uranium dioxide having a spherical shape is generated using the method for generating a crystal of the uranium dioxide with the use of an aldehyde according to the present invention in which the hydrothermal reaction of aqueous uranium nitrate (IV) solutions to which the acetaldehyde is added is proceeded at 390 degrees Celsius and 22 MPa, 300 degrees Celsius and 8.6 MPa, and 200 degrees Celsius and 1.6 MPa, respectively.

More specifically, the hydrothermal synthesis reaction proceeds with the reaction time of 30 minutes at 390 degrees Celsius, 300 degrees Celsius, and 200 degrees Celsius in S108, respectively, and the photo are obtained by taking the dried solid collected at S112 with an electron microscope. Magnification of the electron microscopy is 10,000.

From these figures, in this example, it can be seen that it is possible to obtain a spherical crystalline particle.

Figures 9-11 are diagrams showing results of electron microscope (SEM) analysis, the results is obtained by using the method for generating a crystal of the uranium dioxide with the use of an aldehyde according to the present invention in which the hydrothermal reaction of aqueous uranium nitrate (IV) solution to which the acetaldehyde is added is proceeded at 170 degrees Celsius and 1.3 MPa, 140 degrees Celsius and 0.36 MPa, 100 degrees Celsius and 0.10 MPa, respectively.

### (Example 2)

Referring to FIGs. 12-24, an example of the method for generating a uranium dioxide particle according to the second example will be explained. In this embodiment, the additive is propionaldehyde.

In this example, at S100, 2mmol of ammonium carbonate is added to uranyl nitrate containing 0.5mmol of uranium, and distilled water is further added to the mixture of the ammonium carbonate and the uranyl nitrate to prepare 2.7mL of an uranyl nitrate aqueous solution. Then at S102, 0.3mL of 2-propanol is added to prepare 3mL of the aqueous solution. At S104, this aqueous solution is housed in the cell, and the cell is sealed by covering the opening of the cell of the reactor 100. Then, at S106, the temperature controller 20 of the reaction apparatus 100 controls the heating rods, 14a, 14b, 14c, 14d to have 450 degrees Celsius of the temperature. Next, at S108, the state reached at the S106 is maintained for 30 minutes. At S110, the temperature of the reactor 10 is cooled quickly and the pressure of the reactor 10 is lowered such that the condition in the cell 12 becomes to be a low temperature and low pressure condition. And at S112, the solid phase is collected.

Figure 12 is a diagram showing a result of X-ray diffraction analysis, the result showing that the crystalline uranium dioxide having a fluorite type crystal structure is generated by using the method for generating a crystal of the uranium dioxide with the use of an aldehyde according to the present invention in which the hydrothermal reaction is proceeded under various conditions of aqueous uranium nitrate (IV) solution to which the propionaldehyde is added.

More specifically, it is a result of the X ray diffraction analysis applying to the dried solid phase recovered at S112. From this figure, the hydrothermal reaction proceeds for reaction time of 30 minutes at a temperature of 390 degrees Celsius, 300 degrees Celsius, 200 degrees Celsius, 170 degrees Celsius, 140 degrees Celsius, and 100 degrees Celsius, at S108, products collected in the S112 are found to be a uranium dioxide having a fluorite-type crystal structure.

Moreover, from this figure, the generated uranium dioxide includes uranium and oxygen and includes almost no impurities.

Figures 13, 15, 17, 19, 21, 23 are diagrams showing results of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the propionaldehyde is added is proceeded at 390 degrees Celsius and 22 MPa, 300 degrees Celsius and 8.6 MPa, 200 degrees Celsius and 1.6 MPa, 170 degrees Celsius and 1.3 MPa, 140 degrees Celsius and 0.36 MPa, of 100 degrees Celsius and 0.1 MPa, at S108, respectively.

More specifically, the hydrothermal synthesis reaction proceeds with the reaction time of 30 minutes at 390 degrees Celsius, 300 degrees Celsius, 200 degrees Celsius, 170 degrees Celsius, 140 degrees Celsius, and 100 degrees Celsius, at S108in S108, respectively, and the photo are obtained by taking the dried solid collected at S112 with an electron microscope. Magnification of the electron microscopy is 10,000.

From these figures, in this example, it can be seen that it is possible to obtain a spherical crystalline particle.

Figures 14, 15, 17, 19, 21 and 23 are diagrams showing the distributions of sizes of particles generated by using the method for generating a crystal of the uranium dioxide with the use of an aldehyde according to the present invention in which the hydrothermal reaction of aqueous uranium nitrate (IV) solution to which the propionaldehyde is added is proceeded at 390 degrees Celsius and 22 MPa, 300 degrees Celsius and 8.6 MPa, 200 degrees Celsius and 1.6 MPa, 170 degrees Celsius and 1.3 MPa, 140 degrees Celsius and 0.36 MPa, of 100 degrees Celsius and 0.1 MPa, at S108, respectively. In figures, "size 1" indicates a length of longer diameter and "size 2" indicates a length of shorter diameter.

From Figures 14, 15, 17, 19, 21 and 23, the particle size decreases as the temperature at which the hydrothermal synthesis proceeds decreases, and the length of the long diameter and short diameter is almost the same.

Further, it can be seen that, from these figures, the size of the product may be about 0.5 to 1.0 micrometer.

### (Example 3)

Referring to FIGs. 25-30, an example of the method for generating a uranium dioxide particle according to the second example will be explained. In this embodiment, the additive is cyclohexane carboxylic aldehyde.

In this example, at S100, 2mmol of ammonium carbonate is added to uranyl nitrate containing 0.3mmol of uranium, and distilled water is further added to the mixture of the ammonium carbonate and the uranyl nitrate to prepare 2.7mL of an uranyl nitrate aqueous solution. Then at S102, 0.3mL of cyclohexane carboxylic aldehyde is added to prepare 3mL of the aqueous solution. At S104, this aqueous solution is housed in the cell, and the cell is sealed by covering the opening of the cell of the reactor 100. Then, at S106, the temperature controller 20 of the reaction apparatus 100 controls the heating rods, 14a, 14b, 14c, 14d to have 300, 200, 170, 140, or 100 degrees Celsius of the temperature. Next, at S108, the state reached at the S106 is maintained for 30 minutes. At S110, the temperature of the reactor 10 is cooled quickly and the pressure of the reactor 10 is lowered such that the condition in the cell 12 becomes to be a low temperature and low pressure condition. And at S112, the solid phase is collected.

Figures 26-30 are diagrams showing results of electron microscope (SEM) analysis, the result showing that a crystal of uranium dioxide having a spherical shape is generated by using the method for generating a crystal of the uranium dioxide with the use of aldehydes according to the present invention in which the hydrothermal reaction of aqueous uranium nitrate (IV) solution to which the cyclohexane carboxylic aldehyde is added is proceeded at 390 degrees Celsius and 22 MPa, 300 degrees Celsius and 8.6 MPa, 200 degrees Celsius and 1.6 MPa, 170 degrees Celsius and 1.3 MPa, 140 degrees Celsius and 0.36 MPa, of 100 degrees Celsius and 0.1 MPa, at S108, respectively.

From these figures it can be seen that, when the hydrothermal reaction proceeds at 300 or 200 degrees Celsius, spherical crystals are generated.

### (Comparative Example)

Figures 31 and 32 are diagrams showing results of X-ray diffraction analysis of the product generated using the method for generating a crystal of the uranium dioxide with the no use of an aldehyde according to the present invention in which the hydrothermal reaction of aqueous uranium nitrate (IV) solution to which no aldehyde is added is proceeded at 390 degrees Celsius.

Comparing Fig. 31 with Figs. 5, 12 and 25 of the examples 1-3, respectively, it can be seen that when the aldehyde is not added, there are more impurities than when the aldehyde is added.

In addition, comparing Fig. 31 with Figs. 5, 12 and 25 of the examples 1-3, respectively, it can be seen that when the aldehyde is not added, the shape of the particle is not clearer than as the aldehyde is added.

In the above examples, a method of using an aldehyde as an organic material in the method including mixing a uranium nitrate aqueous solution and the organic material, placing the mixture under high temperature and high pressure the mixture, and cooling the mixture to generate a particle of actinide oxide is disclosed.

In the above examples, functions of aldehyde as an additive may include, in a hydrothermal synthesis reaction including a hydrolysis reaction (9) and an oxidation reaction (10)
[5]

U⁴⁺+H₂O→U (OH)₄ + 4H⁺ (4)

U(OH)₄ → UO₂ + 2H₂O (5)

of preventing the oxidation reaction of the uranium ions U4+ to have an higher oxidation number from proceeding, and/or promoting the progress of oxidation reaction (10). However, the use of aldehydes according to the present invention could be applied also to other actinide than uranium.

In other words, the "crystalline oxide actinide having a crystal structure of a fluorite-type" may be either thorium dioxide, protactinium dioxide, uranium dioxide, neptunium dioxide, plutonium dioxide, americium dioxide, curium dioxide.

Further, in examples 1 to 3 above, uranium dioxide was produced as a metal oxide particle using a reaction vessel (an autoclave).

However, metal oxide particles, such as actinide oxide particles may be generated continuously by mixing the high temperature and high pressure fluid obtained by pressurizing and heating the water and, for example, the pressurized aqueous solution that obtained by mixing the aqueous solution containing metal ions, such as an aqueous solution containing a tetravalent actinide ions or a tetravalent actinide complex and the pressurized aqueous solution containing an aldehyde.

According to such a method, an aqueous solution containing an actinide ion having a valence of 4 or a complex actinide is heated rapidly by mixing an aqueous solution containing metal ions including aldehyde, in particular, with a high-temperature and high-pressure water, and hydrothermal synthesis reactions represented by the chemical reactions (6)-(8) or (9)-(11) may proceed.

### (Second Embodiment)

Referring to FIGs 33-42, the method for using the aldehyde for generating the vanadium trioxide (V₂O₃) from a vanadyl (IV) sulfate aqueous solution according to the present invention will be described in detail.

Figure 34 is a diagram showing a result of X-ray diffraction analysis of a product generated by the hydrothermal reaction (450 degrees Celsius, 30 min) of vanadyl (IV) sulfate aqueous solution, the result showing the product is the vanadium dioxide (V02).

Figure 34 is a flowchart illustrating a method of manufacturing (V₂O₃) vanadium trioxide with the use of aldehydes of the present invention.

First, at S100, 2.7mL of a vanadyl (IV) sulfate aqueous solution is prepared.

At S202, an aldehyde is added to the vanadyl (IV) sulfate aqueous solution prepared at S100 to prepare 3mL of the anadyl (IV) sulfate aqueous solution containing the organic material. Aldehyde may be any one of acetaldehyde, propionaldehyde, cyclohexane carboxylic aldehyde. Then the process proceeds to S204.

At S204, the vanadyl (IV) sulfate aqueous solution containing the aldehyde is housed in the cell 12 of the reactor 100 shown in Fig. 1, and the opening of the cell 12 is covered by the cover plate 16 to seal the cell 12. Then the process proceeds to S206.

At S206, the vanadyl (IV) sulfate aqueous solution containing the aldehyde is heated and pressurized to change it to a high temperature and high pressure state. Specifically, the temperature controller 20 of the reaction apparatus 100 controls the heating rods, 14a, 14b, 14c, 14d to have, for example, 450 degrees Celsius of the temperature so that the aqueous solution in the cell 12 becomes to be hot. When the aqueous solution is evaporated as the temperature of the aqueous solution becomes hot such that steam is generated and the steam applies pressure on a interface between the aqueous solution and the vapor, it is possible to increase the partial pressure of the aqueous solution by the vapor. Then the process proceeds to S208.

At S208, the state reached at the S106 is maintained for a predetermined time, for example, 30 minutes. Then the process proceeds to S110.

At S210, the temperature of the reactor 10 is cooled quickly and the pressure of the reactor 10 is lowered such that the condition in the cell 12 becomes to be a low temperature and low pressure condition. A room temperature and atmospheric condition may be exemplified as the low temperature and low pressure condition. Then the process proceeds to S212.

At S212, the solid and liquid phases are collected, respectively. Uranium dioxide or cerium dioxide is deposited on the solid phase.

That is, a method for manufacturing an actinide oxide particle having a fluorite crystal structure according to the invention, the method including mixing an actinide solution and an organic material; placing the actinide solution mixed with the organic material under high temperature and high pressure environment; and cooling the actinide solution mixed with the organic material, includes;
(1) preparing the vanadyl (IV) sulfate aqueous solution;
(2) mixing an additive that includes an aldehyde into the vanadyl (IV) sulfate aqueous solution;
(3) adding water into the vanadyl (IV) sulfate aqueous solution including the additive to generate an additive-included actinide solution;
(4) placing the additive-included actinide solution in an autoclave;
(5) increasing the temperature in the autoclave in which the additive-included vanadyl (IV) sulfate aqueous solution is placed to a predetermined value;
(6) quenching the temperature in the autoclave in which the additive-included vanadyl (IV) sulfate aqueous solution is placed to a room temperature;
(7) collecting a solid phase in the additive-included actinide solution; and
(8) drying the collected solid phase under reduced pressure to retrieve the crystal of the actinide oxide.

Thus, according to the method of generating the vanadium trioxide (V₂O₃) from the vanadyl (IV) sulfate aqueous solution with the use of aldehydes of the present invention, vanadium trioxide (V₂O₃) having good crystallinity can be generated at low temperature and low pressure rapidly.

### (Comparative example)

Before showing a specific example of the preparation of vanadium trioxide (V₂O₃), referring to FIGs. 34-37, a comparative example comparable with the method for generating the (V₂O₃) vanadium trioxide of the present invention will be explained.

Figure 35 is a diagram showing a result of X-ray diffraction analysis of a product generated by the hydrothermal reaction (450 degrees Celsius, 30 min) of vanadyl (IV) sulfate aqueous solution, the result showing the product is the vanadium dioxide (VO₂).

As experimental conditions, only 0.5 mmol vanadyl sulfate (IV) was dissolved in pure water to prepare 3mL solution. A hydrothermal synthesis reaction of this solution proceeds at 450 degrees Celsius and 32 MPa with reaction time of 30 minutes. As a result, a light blue liquid and a black powder are obtained. After drying the powder, the XRD analysis is applied on the dried powder. Figure 34 is a diagram showing a result of XRD analysis. From FIG. 36, in this case, it can be seen that the vanadium dioxide is being generated. Both of the vanadyl sulfate that is a starting material and vanadium dioxide that is the product have the value of 4. Thus, it can be seen that the reduction reaction and the hydrolysis reaction (12) and (13) does not occur and only the oxidation reaction of (14) proceeds.

Figure 36 is a diagram showing a result of X-ray diffraction analysis of a product generated by the hydrothermal reaction (390 degrees Celsius, 30 min) of vanadyl (IV) sulfate aqueous solution to which sodium nitrate is added, the result showing the product is the vanadium dioxide (VO₂).

In this example, only 2 mmol vanadyl sulfate (IV) was dissolved in pure water to prepare 3mL solution. A hydrothermal synthesis reaction of this solution proceeds at 450 degrees Celsius and 32 MPa with reaction time of 30 minutes. As a result, a light blue liquid and a slightly gray powder are obtained. After drying the powder, the XRD analysis is applied on the dried powder. Figure 35 is a diffractogram showing a result of XRD analysis. From this diffractogram, it can be seen that the vanadium dioxide is generated. When comparing with the result of the XRD analysis shown in FIG. 34, a good vanadium dioxide is obtained. However, vanadium trioxide (V₂O₃) is not generated.

Figure 37 is a diagram showing a result of X-ray diffraction analysis of a product generated by the hydrothermal reaction (390 degrees Celsius, 30 min) of vanadyl (IV) sulfate aqueous solution to which a sodium nitrate is added, the result showing the product is the vanadium dioxide (VO₂).

Only a salt (1 mmol sodium nitrate) is added to 1 mmol vanadyl sulfate (IV), and the mixture is dissolved in pure water to prepare 3mL solution. A hydrothermal synthesis reaction of this solution proceeds at 450 degrees Celsius and 32 MPa with reaction time of 30 minutes. As a result, a light blue liquid and a slightly gray powder are obtained. After drying the powder, the XRD analysis is applied on the dried powder. Figure 36 is a diffractogram showing a result of XRD analysis. From this diffractogram, it can be seen that the vanadium dioxide is generated.

As shown in Figure 36, an evidence that vanadium dioxide is generated when only a sodium nitrate is added indicates the sodium nitrate alone has no reduction function. Further, because the base line is curved at around 2 theta=20 degrees which suggests the product has amorphous state, crystalline is good in the examples shown in Figure 34 and 35.

Figure 37 is a diagram showing a result of X-ray diffraction analysis of a product generated by the hydrothermal reaction (390 degrees Celsius, 30 min) of vanadyl (IV) sulfate aqueous solution to which propionaldehyde is added, the result showing the product is the vanadium dioxide (VO₂).

Only an aldehyde (10mmol propionaldehyde) is added to 1 mmol vanadyl sulfate (IV), and the mixture is dissolved in pure water to prepare 3mL solution. A hydrothermal synthesis reaction of this solution proceeds at 450 degrees Celsius and 32 MPa with reaction time of 30 minutes. As a result, a translucent white liquid and a slightly gray black powder are obtained. After drying the powder, the XRD analysis is applied on the dried powder. Figure 37 is a diffractogram showing a result of XRD analysis. The results include a product to which the XRD analysis cannot apply. However, an evidence that only amorphous material is generated when only an aldehyde is added indicates that the reduction function of aldehyde may be insufficient.

### (Example 1)

Referring to FIGs. 38 and 39, examples of the method for generating a vanadium trioxide (V₂O₃) using an aldehyde will be explained.

Figure 38 is a diagram showing a result of X-ray diffraction analysis of a product generated by the hydrothermal reaction (390 degrees Celsius, 30 min) of vanadyl (IV) sulfate aqueous solution to which a propionaldehyde is added, the result showing the product is the vanadium trioxide (V₂O₃), and Figure 39 is a diagram showing a result of X-ray diffraction analysis of a product generated by the hydrothermal reaction (390 degrees Celsius, 30 min) of vanadyl (IV) sulfate aqueous solution to which the cyclohexane aldehyde is added, the result showing the product is the vanadium trioxide (V₂O₃).

Only an aldehyde (10 mmol propionaldehyde or 10 mmol hexane dichloride carboxaldehyde) is added to 1 mmol vanadyl sulfate (IV), and the mixture is dissolved in pure water to prepare 3mL solution. A hydrothermal synthesis reaction of this solution proceeds at 390 degrees Celsius and 23 MPa with reaction time of 30 minutes. As a result, a translucent white liquid and a slightly gray black powder are obtained. After drying the powder, the XRD analysis is applied on the dried powder. Figures 38 and 39 are diffractograms showing results of XRD analysis. As a result, the resulting vanadium trioxide has excellent crystallinity. Comparing the results of these two examples, the crystallinity when hexane dichloride carboxaldehyde is used is better.

In general, it is known that a nitrite ion that may be obtained by decomposing a sodium nitrate may act as both an oxidizing agent and a reducing agent. A evidence that a sufficient reduction function can be obtained only when the both are added may indicate the reduction function be mediated by the nitrite ion that may be obtained by decomposing the sodium nitrate m with respect to vanadium.

From this example, we know that in order to produce the (V203), it is necessary to both of a salt and a aldehyde to generate vanadium trioxide (V₂O₃) from the vanadyl sulfate aqueous solution (IV) via a hydrothermal synthesis reaction.

### (Example 2)

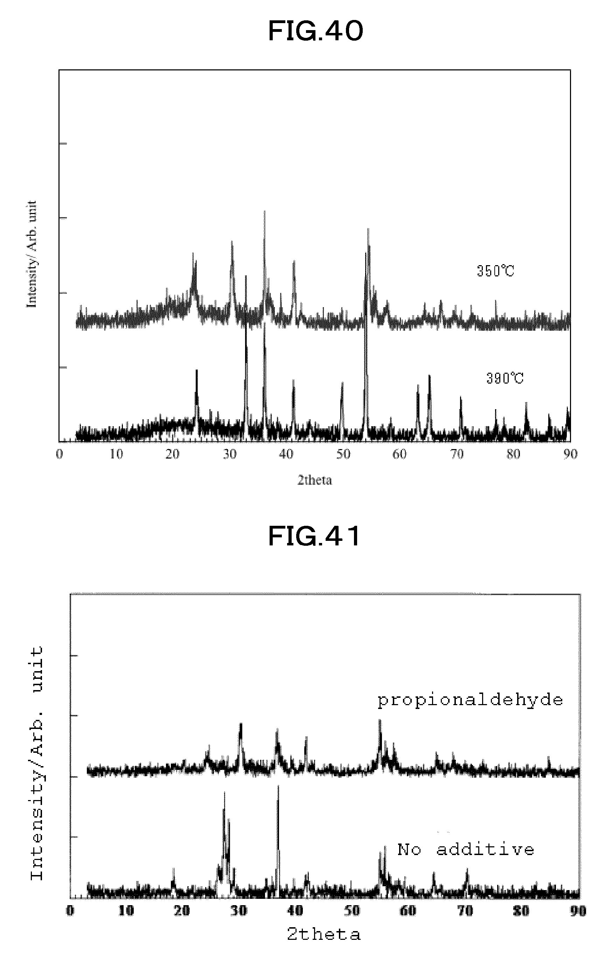

Figure 40 is a diagrams showing a product generated by the hydrothermal reaction (390 degrees Celsius, 30 min) of vanadyl (IV) sulfate aqueous solution to which the sodium nitrate and the ethanol are added is the vanadium trioxide (V₂O₃) (top). However, hydrothermal synthesis reaction at 350 degrees Celsius for 30 minutes is insufficient to generate the vanadium trioxide (V203) (bottom). The hydrothermal synthesis reaction at 390 degrees Celsius with reaction time of 30 minutes generates a vanadium trioxide as a product, while the hydrothermal synthesis reaction at 350 degrees Celsius with reaction time of 30 minutes may not generates the vanadium trioxide (V₂O₃).

Only a salt (1 mmol sodium nitrate) and 10mmol ethanol are added to 1 mmol vanadyl sulfate (IV), and the mixture is dissolved in pure water to prepare 3mL solution. A hydrothermal synthesis reaction of this solution proceeds at 450 degrees Celsius and 32 MPa with reaction time of 30 minutes. As a result, a light blue liquid and a slightly gray powder are obtained. After drying the powder, the XRD analysis is applied on the dried powder. FIG, 40 (top) is a diffractogram showing a result of XRD analysis. From this diffractogram, it can be seen that the vanadium dioxide is generated. However, in the case of using the ethanol as an additive, there is a need for high-temperature and high-pressure supercritical conditions. And lower temperatures (350 degrees Celsius) in pressure (16 MPa), light gray powder and semi-transparent liquid having slightly greenish tinge are obtained. After drying the powder, the XRD analysis is applied on the dried powder to obtain the diffractogram shown in FIG. 40 (bottom). From this diffractogram, it can be seen that the vanadium dioxide is not generated. It can be considered that the aldehyde has a function in which the mediation action of the nitrite ion may prevent the reducion action against the nitrite ion from being applied. The reducion action of the ethanol feature will not work unless high-temperature high-pressure supercritical water conditions compared to the aldehyde.

### (Example 3)

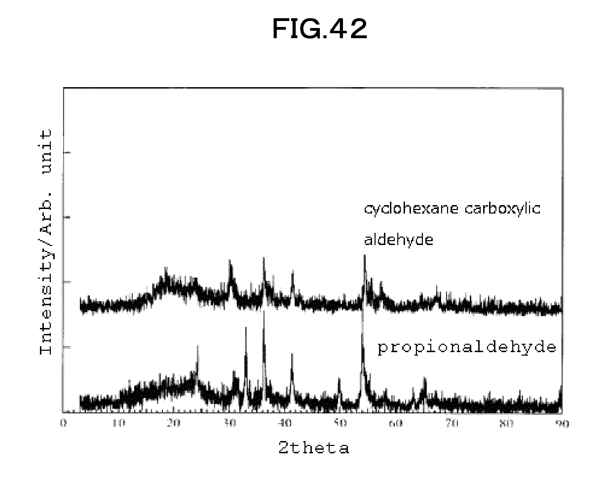

Figure 41 is a diagrams showing a product generated by the hydrothermal reaction (390 degrees Celsius, 30 min) of a vanadyl (IV) sulfate aqueous solution to which the sodium nitrate and the propionaldehyde are added is the vanadium trioxide (V₂O₃) with a suppressed impurity mixing. Figure 42 is a diagrams showing a product generated by the hydrothermal reaction (390 degrees Celsius, 30 min) of vanadyl (IV) sulfate aqueous solution to which the sodium nitrate and the propionaldehyde or cyclohexane carboxylic aldehyde are added.

Figure 41 is obtained in the following manner. Iron sulfate is added to the vanadyl (IV) sulfate aqueous solution, and the mixture is dissolved in pure water to prepare the 3mL vanadyl sulfate solution. A hydrothermal synthesis reaction of this solution proceeds at 390 degrees Celsius and 23 MPa with reaction time of 30 minutes. As a result, the ocher-colored powder and greenish blue liquid are obtained. In addition, strong hydrogen sulfide odor occurs. This is caused by reducing the sulfate ions. After drying the powder, the XRD analysis is applied on the dried powder. Figure 41 is a diffractogram showing results of XRD analysis. As a result, it can be seen that the iron sulfate is sulfide is generated.

Iron sulfate and the aldehyde (propionaldehyde) are added to vanadyl sulfate (IV), and the mixture is dissolved to prepare 3mL solution. A hydrothermal synthesis reaction of this solution proceeds at 390 degrees Celsius and 23 MPa with reaction time of 30 minutes. As a result, the black powder and gray-tinted clear liquid was obtained. After drying the powder, the XRD analysis is applied on the dried powder. Figure 41 is a diffractogram showing results of XRD analysis. From these two results, the occurrence of iron sulfide is suppressed by adding the propionaldehyde.

The reaction containing sulfate ions should proceed at low temperature in order to prevent the occurrence of the reaction of hydrogen sulfide. The chemical reaction involving sulfate under the supercritical condition may be dangerous because a hydrogen sulfide reducing sulfate ions may be produced. The hydrogen sulfide is an acute toxicity matter defined by the Toxic Substances Control Act and a inflammable gas defined in the High Pressure Gas Safety Act. Further, a chemical reaction involving sulfate at a high temperature may generate a sulfate ion when the compound containing iron is tried to be controlled. On the other hand, a chemical reaction at low temperatures below 350 degrees Celsius can suppress the generation of hydrogen sulfide and iron sulfide and can provide a vanadium trioxide having good crystallinity at a low temperature and low pressure.

The diffractogram shown Figure 42 are obtained in the following manner. A salt (1 mmol sodium nitrate) and an aldehyde (10 mmol propionaldehyde or 10 mmol cyclohexane carboxylic aldehyde) are added to a 1 mmol vanadyl sulfate, and the mixture is dissolved to prepare 3mL solution. A hydrothermal synthesis reaction of this solution proceeds at 300 degrees Celsius and 9 MPa with reaction time of 30 minutes. As a result, the black dark red solution and black powder are obtained when the additive is the propionaldehyde. When the addive is cyclohexane carboxylic aldehyde, a two-phase liquid having dark red color and transparent and gray powder are obtained. After drying the powder, the XRD analysis is applied on the dried powder. Figure 42 is a diffractogram showing results of XRD analysis. From these two results, it is verified that the vanadium trioxide having a certain crystallinity is generated.

## Claims

1. A method for using an aldehyde, comprising:
mixing the aldhyde with an aqueous solution including a metal ion to prepare a mixture;
placing the mixture under a high temperature and high pressure environment; and
cooling the mixture to generate a particle of a metal oxide.

2. The method according to claim 1, wherein the metal ion is a tetravalent actinide ion or a tetravalent actinide complex, and the metal oxide is an actinide oxide.

3. The method according to claim 2, wherein the metal ion is a tetravalent uranium ion, and the metal oxide is a uranium dioxide.

4. The method according to any one of claims 1 to 3, wherein the aldehyde includes one of acetaldehyde, propionaldehyde, cyclohexane carboxylic aldehyde.

5. The method according to any one of claims 1 to 4, the high temperature and high pressure environment has a temperature lower than that of the supercritical state or the subcritical state of the water.

6. The method according to any one of claims 1 to 5, the actinide oxide has at least one of a predetermined size and a predetermined shape.

7. The method according to claim 6, the predetermined shape includes rectangular, spherical, cubic including plate-shaped, elliptical, polyhedral, bell-proof.

8. The method according to any one of claims 1 to 7, the actinide oxide is a fine particle having a particle diameter of 1 to 1000 micrometers.

9. The method according to any one of claims 1 to 8, the actinide oxide particles is used as a nuclear fuel used in power generation using nuclear fission.

10. A method for using an aldehyde, comprising:
mixing the aldehyde with an aqueous solution containing an actinide ion or an actinide complex having an oxidation number greater than the value of 4 to prepare a mixture; and
placing the mixture under high temperature and high pressure the mixture to make reduction reaction of the actinide ion or the actinide complex and subsequent oxidation reaction proceeds for generating a particle of actinide oxide.

11. The method according to claim 10, wherein the actinide ion or the actinide complex having the oxidation number greater than the value of 4 is a uranyl nitrate including a tetravalent uranium ion, and the particle of actinide oxide is a particle of uranium dioxide.

12. The method according to claim 10 or 11, wherein the oxidation reaction proceeds at a temperature higher than 100 degrees Celsius and lower than that of the supercritical state or the subcritical state of the water.

13. The method according to any one of claims 9 to 12, wherein the aldehyde includes one of acetaldehyde, propionaldehyde, cyclohexane carboxylic aldehyde.

14. The method according to claim 1, wherein the metal ion is a vanadium dioxide, and the metal oxide is a vanadium trioxide.

15. The method according to claim 14, wherein the high temperature and high pressure environment has a temperature lower than that of the supercritical state or the subcritical state of the water.

16. The method according to claim 14 or 15, wherein a salt and the aqueous solution including a vanadium dioxide ion are mixed to generate a vanadium trioxide.

17. The method according to claim 16, wherein the salt is a sodium nitrate.
